# EUROPÄISCHE PATENTSCHRIFT

(11) **EP 3 237 287 B1**
(45) Veröffentlichungstag und Bekanntmachung des Hinweises auf die Patenterteilung: **30.08.2023**
(21) Anmeldenummer: 15823165.4
(22) Anmeldetag: 23.12.2015
(51) Int. Cl.: B64D 11/06

(54) **SITZVORRICHTUNG**
SEAT DEVICE
DISPOSITIF DE SIÈGE

(30) Priorität: 23.12.2014 DE 102014119611
(43) Veröffentlichungstag der Anmeldung: 01.11.2017
(73) Patentinhaber: Recaro Aircraft Seating GmbH & Co. KG, 74523 Schwäbisch Hall (DE)
(72) Erfinder: BICH, Christoph, 73453 Abtsgmünd (DE); THIELE, Maik, 64646 Heppenheim (DE); SCHÜRG, Christoph, 74523 Schwäbisch Hall (DE); JAKUBOWSKI, Jens, 73527 Schwäbisch Gmünd (DE); ERB, Andreas, 74523 Schwäbisch Hall (DE); JUSSLI, Zoltan, 74182 Obersulm (DE); TUTE, Christopher, 67808 Schönborn (DE); SCHÜRG, Hartmut, 70597 Stuttgart (DE); KO, Djunianto, 73760 Ostfildern (DE); BAUMANN,Jürgen, 78351 Bodman-Ludwigshafen (DE)
(74) Vertreter: Daub, Thomas
(86) Internationale Anmeldenummer: PCT/EP2015/081217
(87) Internationale Veröffentlichungsnummer: WO 2016/102699

(56) Entgegenhaltungen:
- EP-A1- 0 639 479
- WO-A2-03/063650
- DE-A1- 2 632 354
- DE-A1- 10 224 048
- DE-A1-102005 017 879
- DE-A1-102009 011 387
- FR-A1- 2 768 243
- GB-A- 2 437 164
- JP-A- H0 672 218
- US-A- 4 291 916

## Beschreibung

### Stand der Technik

Die Erfindung betrifft eine Sitzvorrichtung nach dem Oberbegriff des Patentanspruchs 1. Es ist bereits eine Sitzvorrichtung, insbesondere eine Fluggastsitzvorrichtung, mit wenigstens einer Sitzbodeneinheit und einer mit der Sitzbodeneinheit verbundenen Rückenlehneneinheit, wobei zumindest die Rückenlehneneinheit in einer Komfortposition und einer weiteren Sitzposition positionierbar ist, vorgeschlagen worden.

Die Aufgabe der Erfindung besteht insbesondere darin, eine gattungsgemäße Vorrichtung mit verbesserten Eigenschaften hinsichtlich eines Passagierkomforts bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Sitzvorrichtung, insbesondere einer Fluggastsitzvorrichtung, mit den Merkmalen des Anspruchs 1.

Es wird vorgeschlagen, dass die Komfortposition als eine für einen Passagierkomfort optimierte Grundposition ausgebildet ist. Unter einer "Sitzvorrichtung" soll dabei insbesondere eine Vorrichtung verstanden werden, die wenigstens einen Teil oder einen gesamten Sitz, wie insbesondere einen Fluggastsitz, ausbildet. Dabei bildet die Sitzvorrichtung insbesondere einen Fluggastsitz aus, der als ein Economy-Class-Sitz oder ein Premium-Economy-Class-Sitz ausgebildet ist, der insbesondere für Mittel- und/oder Langstreckenflüge vorgesehen ist. Die Sitzvorrichtung bildet dabei vorzugsweise insbesondere einen Fluggastsitz mit einer einem Passagier zur Verfügung stehenden Grundfläche von mehr als 0,5 qm aus. Unter einem "Fluggastsitz" soll dabei insbesondere ein Sitz verstanden werden, der in einer Flugzeugkabine eines Flugzeugs aufgeständert ist. Dabei ist der Fluggastsitz vorzugsweise als Teil einer von mehreren nebeneinander angeordneten Fluggastsitzen ausgebildet. Der Fluggastsitz umfasst dabei insbesondere wenigstens eine Sitzbodeneinheit, die einen Sitzbereich für einen Passagier ausbildet, eine Rückenlehneneinheit, die eine Rückenlehnenauflagefläche bereitstellt, an der sich ein auf dem Fluggastsitz sitzender Passagier mit seinem Rücken abstützen kann, und wenigstens eine Armlehneneinheit, auf der der Passagier einen Arm zumindest teilweise ablegen kann. Unter einer "Sitzbodeneinheit" soll dabei insbesondere eine Einheit verstanden werden, die den Sitzbereich für einen Passagier ausbildet, wobei die Sitzbodeneinheit dabei vorzugsweise von einem Grundkörper und einer auf dem Grundkörper angebrachten Polstereinheit gebildet ist. Unter einem "Sitzbereich" soll dabei insbesondere ein Bereich des Fluggastsitzes verstanden werden, der dazu vorgesehen ist, dass ein Passagier, insbesondere während eines Flugs, darauf sitzt. Der Sitzbereich ist dabei von der Sitzbodeneinheit ausgebildet, die vorzugsweise wenigstens einen Grundkörper und ein auf dem Grundkörper angebrachtes Polsterelement umfasst, welches den Sitzbereich ausbildet. Unter einer "Rückenlehneneinheit" soll dabei insbesondere eine Einheit des Fluggastsitzes verstanden werden, die eine Rückenlehnenauflagefläche ausbildet, an der ein auf dem Fluggastsitz sitzender Passagier seinen Rücken anlehnen kann. Dabei umfasst die Rückenlehneneinheit vorzugsweise zumindest einen Grundkörper und eine Polstereinheit, welche die Rückenlehnenauflagefläche ausbildet. Die Rückenlehneneinheit ist dabei an einem hinteren Ende der Sitzbodeneinheit angeordnet und erstreckt sich von der Sitzbodeneinheit nach oben, von einer Aufständereinheit weg. Unter einer "Komfortposition" soll dabei insbesondere eine Position der Sitzvorrichtung verstanden werden, in der eine Rückenlehneneinheit der Sitzvorrichtung eine aus einer TTL-Position nach hinten verschwenkte Neigung aufweist, die einem Passagier eine vorteilhaft komfortable, nicht aufrechte Sitzposition ermöglicht. Unter einer "weiteren Sitzposition" soll dabei insbesondere eine Sitzposition verstanden werden, in der insbesondere die Rückenlehneneinheit eine andere Neigung zu einem Kabinenboden aufweist als in der Komfortposition. Dabei ist eine weitere Sitzposition beispielsweise als TTL-Position ausgebildet. Unter einer "TTL-Position" soll dabei insbesondere eine aufrechte Position des Fluggastsitzes verstanden werden, die aus Sicherheitsgründen, insbesondere in einer Startphase, in einer Landephase und während Turbulenzen, eingenommen werden muss. Dabei stehen in der TTL-Position eine Rückenlehneneinheit des Fluggastsitzes und der Sitzboden im Wesentlichen senkrecht aufeinander, vorzugsweise in einem Winkel von zwischen 90 Grad und 105 Grad. Die TTL-Position bildet dabei eine erste Endposition aus, in die der Flugzeugsitz maximal verstellbar ist. Unter einer "Grundposition" soll dabei insbesondere eine Position verstanden werden, für die ein Sitz, insbesondere ein Fluggastsitz, ausgelegt und konstruiert ist. In der Grundposition bildet die Rückenlehneneinheit vorzugsweise eine im Wesentlichen ebene durchgehende Fläche aus. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch eine erfindungsgemäße Ausgestaltung kann ein besonders komfortabler Sitz für einen Passagier bereitgestellt werden, insbesondere kann ein Schlafkomfort erhöht und ein Seitenschlaf ermöglicht werden.

Weiter wird vorgeschlagen, dass die Rückenlehneneinheit einen starren Teilbereich aufweist, der starr mit der Sitzbodeneinheit gekoppelt ist. Unter einem "starren Teilbereich" soll dabei insbesondere ein Teilbereich verstanden werden, der in sich im Wesentlichen nicht elastisch verformbar ist. Unter "starr gekoppelt" soll dabei insbesondere verstanden werden, dass die beiden miteinander gekoppelten Elemente, wie insbesondere der starre Teilbereich der Rückenlehneneinheit und die Sitzbodeneinheit, eine feste zerstörungsfrei unveränderliche Ausrichtung zueinander aufweisen. Dadurch können die Rückenlehneneinheit und die Sitzbodeneinheit besonders vorteilhaft zumindest teilweise gemeinsam ausgebildet werden, wodurch eine besonders vorteilhafte Ergonomie für einen Passagier erzielt werden kann.

Es wird weiter vorgeschlagen, dass die Rückenlehneneinheit einen oberen Teilbereich aufweist, der schwenkbar zu dem unteren starren Teilbereich ausgebildet ist. Unter einem "oberen Teilbereich" soll dabei insbesondere ein Teilbereich der Rückenlehneneinheit verstanden werden, der einen von einer Aufständereinheit abgewandten Teil der Rückenlehneneinheit ausbildet. Dabei sind der obere Teilbereich und der untere starre Teilbereich vorzugsweise als separate Bauteile ausgebildet. Unter "schwenkbar" soll dabei insbesondere verstanden werden, dass eine Ausrichtung des oberen Teilbereichs und des unteren Teilbereichs durch eine Rotation zueinander um eine gemeinsame Schwenkachse verstellbar ist. Dadurch kann eine besonders vorteilhafte Rückenlehneneinheit bereitgestellt werden, die insbesondere in einer Komfortposition besonders komfortabel für einen Passagier ist und weiterhin in eine notwendige TTL-Position verfahrbar ist.

Ferner wird vorgeschlagen, dass die Sitzvorrichtung wenigstens eine Lagereinheit, die den starren unteren Teilbereich mit dem oberen schwenkbaren Teilbereich lagert, und eine Schwenkachse ausbildet, die im Bezug auf ein hinteres Ende der Rückenlehneneinheit in Sitzrichtung nach vorne versetzt ist. Unter einer "Lagereinheit" soll dabei insbesondere eine Gleit- und/oder Rolllagerung verstanden werden, über die zwei über die Lagereinheit miteinander verbundene Elemente, wie insbesondere der untere Teilbereich und der obere Teilbereich, zueinander verschwenkt werden können. Unter "nach vorne versetzt" soll dabei insbesondere verstanden werden, dass die Schwenkachse nicht an einem in Sitzrichtung gesehenen hinteren Ende der Rückenlehneneinheit angeordnet ist, sondern in Sitzrichtung nach vorne verschoben ist. Dadurch kann eine besonders vorteilhafte Verschwenkung des unteren Teilbereichs und des oberen Teilbereichs zueinander erreicht werden.

Weiter wird vorgeschlagen, dass die Sitzvorrichtung wenigstens ein seitlich angeordnetes, sich von der Rückenlehneneinheit in einem Bereich der Lagereinheit nach vorne erstreckendes Anlageelement aufweist. Unter einem "Anlageelement" soll dabei ein Element verstanden werden an dem sich ein Passagier mit einem Teil seines Körpers abstützen kann. Dabei weist die Sitzvorrichtung vorzugsweise auf beiden Seiten der Rückenlehneneinheit jeweils ein Anlageelement auf. Dadurch kann die Rückenlehneneinheit besonders vorteilhaft komfortabel ausgestaltet werden.

Zudem wird vorgeschlagen, dass die Rückenlehneneinheit und die Sitzbodeneinheit in der Grundposition einen Sitzwinkel von mindestens 120 Grad aufweisen. Unter einem "Sitzwinkel" soll dabei insbesondere ein Winkel verstanden werden, den die Rückenlehneneinheit und die Sitzbodeneinheit in einem montierten Zustand zueinander aufweisen. Dadurch kann eine besonders komfortable und ergonomische Sitzposition erreicht werden. Unter "mindestens 120 Grad" soll dabei insbesondere verstanden werden, dass der Sitzwinkel zwischen der Rückenlehneneinheit und der Sitzbodeneinheit wenigstens 120 Grad, vorzugsweise mehr als 125 Grad und in einer besonders vorteilhaften Ausgestaltung mehr als 130 Grad aufweist.

Weiterhin wird vorgeschlagen, dass die Rückenlehneneinheit in der Grundposition eine Neigung von wenigstens 120 Grad zu einer Aufständerebene aufweist. Unter einer "Aufständerebene" soll dabei insbesondere eine Ebene verstanden werden, auf der der Fluggastsitz mit seiner Aufständereinheit aufgeständert ist. Dabei wird die Aufständerebene von einem Kabinenboden des Flugzeuges gebildet, in dem der Fluggastsitz angebracht ist. Unter einer "Neigung von wenigstens 120 Grad" soll dabei verstanden werden, dass ein Winkel zwischen der Aufständerebene und der Rückenlehneneinheit wenigstens 120 Grad, vorzugsweise 125 Grad und in einer besonders vorteilhaften Ausgestaltung 130 Grad beträgt. Dadurch kann die Rückenlehneneinheit in der Grundposition besonders vorteilhaft ausgerichtet werden.

Ferner wird vorgeschlagen, dass der Sitzbereich der Sitzbodeneinheit einen Grundkörper aufweist, der zumindest in einem vorderen Bereich zumindest zwei in einer Querrichtung voneinander getrennte Teilbereiche ausbildet, die in einer Höhe zueinander beweglich sind. Unter einem "Grundkörper" soll dabei insbesondere ein Element verstanden werden, welches Teil einer tragenden Struktur ist und dazu vorgesehen ist, in die Sitzbodeneinheit eingeleitete Kräfte weiterzuleiten. Unter "voneinander getrennten Teilbereichen" sollen dabei insbesondere zwei Bereiche verstanden werden, die insbesondere räumlich voneinander getrennt sind, wobei zwischen den beiden Teilbereichen dabei vorzugsweise eine Lücke angeordnet ist. Grundsätzlich ist es auch denkbar, dass ein Bereich zwischen den beiden voneinander getrennten Teilbereichen durch ein Material gebildet ist, das insbesondere elastische Eigenschaften aufweist, sodass dieses Material eine Bewegung der Teilbereiche zueinander nur unwesentlich einschränkt. Dadurch kann eine besonders vorteilhafte Sitzbodeneinheit bereitgestellt werden.

Es wird weiter vorgeschlagen, dass der Grundkörper zumindest in seinem vorderen Bereich zumindest einen Schlitz ausbildet, der die zumindest zwei Teilbereiche voneinander abtrennt. Dadurch können die Teilbereiche besonders einfach ausgebildet werden.

Weiterhin wird vorgeschlagen, dass die Sitzvorrichtung wenigstens eine Armlehneneinheit aufweist, die den Sitzbereich seitlich begrenzt. Unter einer "Armlehneneinheit" soll dabei insbesondere eine Einheit verstanden werden, die einen Teil oder vorzugsweise eine komplette Armlehne für einen Sitz, insbesondere einen Fluggastsitz, ausbildet. Die Armlehneneinheit bildet dabei wenigstens eine Auflagefläche aus, auf der ein auf dem Fluggastsitz sitzender Passagier seinen Arm zumindest teilweise ablegen kann. Zur Ausbildung der wenigstens einen Auflagefläche weist die Armlehneneinheit dabei wenigstens ein Auflageelement auf. Dadurch kann besonders einfach ein Element geschaffen werden, auf dem ein Passagier seinen Arm zumindest teilweise ablegen kann.

Es wird weiter vorgeschlagen, dass die Armlehneneinheit wenigstens ein im Wesentlichen senkrecht zur Sitzbodeneinheit ausgerichtetes Abstütz- und/oder Abtrennelement und wenigstens ein damit schwenkbar verbundenes Auflageelement aufweist. Unter einem "Auflageelement" soll dabei insbesondere ein Element verstanden werden, das vorzugsweise aus einem elastischen formstabilen Material gebildet ist und wenigstens eine Fläche aufweist, die die Auflagefläche direkt oder indirekt ausbildet. Es ist denkbar, dass das Auflageelement die Auflagefläche direkt ausbildet und ein Passagier direkt in Kontakt mit dem Auflageelement kommt oder dass die Armlehneneinheit wenigstens ein Polsterelement umfasst, das das Auflageelement bedeckt und so die Auflagefläche ausbildet, wodurch das Auflageelement die Auflagefläche indirekt ausbildet. Das Auflageelement ist dabei vorzugsweise verstellbar ausgebildet und kann zumindest zwischen einer Ruhestellung und einer Gebrauchsstellung verstellt werden. Dabei ist das Auflageelement vorzugsweise schwenkbar gelagert und kann zwischen der Ruhestellung und der Gebrauchsstellung verschwenkt werden. Grundsätzlich ist es auch denkbar, dass das Auflageelement auf eine andere Weise zwischen den beiden Stellungen verschiebbar ist, beispielsweise über eine Linearführung. Unter einem "Abstütz- und/oder Abtrennelement" soll dabei insbesondere ein Element verstanden werden, das einen Bereich, insbesondere die Auflagefläche der Armlehneneinheit, von einer Auflagefläche eines benachbarten Fluggastsitzes oder von einem weiteren Bereich des Flugzeugs, wie beispielsweise einem Gang, abtrennt und eine Abstützfläche bereitstellt, an der sich ein Passagier zur Seite hin abstützen kann. Unter einer "Abstützfläche des Abstütz- und/oder Abtrennelements" soll dabei insbesondere eine Fläche verstanden werden, die im Wesentlichen senkrecht zu der Auflagefläche des Auflageelements ausgerichtet und dem Sitzbereich des Fluggastsitzes zugewandt ist. Darunter, dass das "Auflageelement schwenkbar ist", soll dabei insbesondere verstanden werden, dass das Auflageelement über eine Lagerung zwischen zumindest zwei Stellungen verschwenkt werden kann. Dabei ist das Auflageelement vorzugsweise zwischen einer Ruhestellung und einer Gebrauchsstellung verschwenkbar. Unter einer "Ruhestellung des Auflageelements" soll dabei insbesondere eine Stellung des Auflageelements verstanden werden, in der die Auflagefläche des Auflageelements für den Passagier zur Auflage seines Armes nicht genutzt werden kann und das Auflageelement möglichst platzsparend an der Sitzvorrichtung angebracht ist. Die Ruhestellung ist als Stellung ausgebildet, in der der Passagier das Auflageelement nicht benötigt und in der das Auflageelement dabei möglichst platzsparend und komfortabel für den Passagier angeordnet ist. Unter einer "Gebrauchsstellung des Auflageelements" soll dabei insbesondere eine Stellung des Auflageelements verstanden werden, in der die Auflagefläche des Auflageelements für den Passagier zur Auflage seines Armes genutzt werden kann und das Auflageelement dabei von dem Abstütz- und/oder Abtrennelement weggeklappt ist. Durch das schwenkbare Auflageelement kann ein Passagier wahlweise seinen Arm auf die Armlehneneinheit auflegen oder das Auflageelement vorteilhaft wegklappen, um den dadurch entstehenden Raum anders zu nutzen.

Weiter wird vorgeschlagen, dass die Sitzvorrichtung wenigstens ein Abstützelement aufweist, wobei das Abstützelement zumindest einen Bereich zwischen der Sitzbodeneinheit, der Armlehneneinheit und/oder der Rückenlehneneinheit überspannt. Unter einem "Abstützelement" soll dabei insbesondere ein Element verstanden werden, an dem sich ein Passagier mit einem Teil seines Körpers, insbesondere mit einem unteren, seitlichen Rückenbereich, abstützen kann. Dabei ist das Abstützelement von einem Element gebildet, das eine Fläche aufweist, über die eine Kraft in eine tragende Struktur der Sitzvorrichtung eingeleitet werden kann. Dabei kann das Abstützelement von verschiedenen Elementen gebildet sein. Dabei ist es denkbar, dass das Abstützelement von einem Polster, einem Luftkissen, einem elastischen Kunststoff oder einem Bespannungselement, wie insbesondere einem Textil, gebildet ist. Grundsätzlich ist es auch denkbar, dass mehrere nebeneinander ausgeordnete Abstützelemente vorhanden sind, beispielsweise mehrere nebeneinander verlaufende Gummibänder. Vorzugsweise ist das Abstützelement dabei als ein Bespannungselement ausgebildet. Unter einem "Bespannungselement" soll dabei insbesondere ein elastisches Element verstanden werden, das durch Befestigung an mehreren seiner Enden in einem Bereich aufgespannt ist. Dabei ist das Bespannungselement vorzugsweise von einem Textil, wie insbesondere einem Netz, gebildet. Grundsätzlich ist es auch denkbar, dass das Bespannungselement von einem dünnwandigen Kunststoff, einem Faserverbundwerkstoff oder anderen, dem Fachmann als sinnvoll erscheinenden Materialien gebildet ist. Durch das Abstützelement kann vorteilhaft eine seitliche Abstützung bereitgestellt werden, an der sich ein Passagier mit seinem Rücken seitlich abstützen kann und eine besonders komfortable Position auf dem Fluggastsitz einnehmen kann.

Weiter wird vorgeschlagen, dass das Abstützelement in einer Ruhestellung des Auflageelements an eine Abstützfläche des Auflageelements anschließt. Unter einer "Abstützfläche des Auflageelements" soll dabei insbesondere eine Fläche verstanden werden, an die sich ein auf dem Fluggastsitz sitzender Passagier insbesondere seitlich anlehnen kann. Dabei ist die Abstützfläche insbesondere gepolstert ausgebildet. Die Abstützfläche ist dabei auf einer der Auflagefläche gegenüberliegenden Seite des Auflageelements angeordnet. Die Abstützfläche ist in der angeklappten Stellung dem Sitzbereich zugewandt. Dadurch kann das Auflageelement in einer Ruhestellung vorteilhaft genutzt werden und so kann ein besonders komfortabler Fluggastsitz bereitgestellt werden.

Ferner wird vorgeschlagen, dass die Rückenlehneneinheit eine Rückenlehnenauflagefläche ausbildet, die in einem unteren Bereich eine Verjüngung aufweist. Unter einer "Rückenlehnenauflagefläche" soll dabei insbesondere eine Fläche verstanden werden, die dem Passagier zur Verfügung steht, um sich mit seinem Rücken anzulehnen. Unter einem "unteren Bereich" soll dabei insbesondere ein Bereich der Rückenlehneneinheit verstanden werden, der der Sitzbodeneinheit zugewandt ist. Der untere Bereich nimmt dabei in etwa das untere Drittel der Rückenlehnenauflagefläche ein. Unter einer "Verjüngung" soll dabei insbesondere ein Bereich verstanden werden, der über eine definierte Länge unterschiedliche Breiten aufweist und dabei, von einem Startpunkt der Verjüngung aus gesehen, immer schmäler wird. Dadurch kann eine besonders vorteilhafte und komfortable Rückenlehnenauflagefläche erreicht werden.

Zudem wird ein Layout vorgeschlagen, bei dem wenigstens zwei Fluggastsitze hintereinander angeordnet sind, wobei sich eine Rückenlehneneinheit des vorderen Fluggastsitzes in einer Komfortposition bis über eine Sitzbodeneinheit des hinteren Fluggastsitzes erstreckt. Unter einem "Layout" soll dabei eine Anordnung mehrerer Flugzeuggastsitze in einer Flugzeugkabine verstanden werden. Unter "hintereinander angeordnet" soll dabei insbesondere in einer Reihe hintereinander angeordnet verstanden werden, wobei parallel zu den Sitzrichtungen der Fluggastsitze verlaufende Mittelachsen der hintereinander angeordneten Fluggastsitze koaxial zueinander angeordnet sind. Die hintereinander angeordneten Fluggastsitze sind dabei in dieselbe Richtung ausgerichtet. Dabei sind die Fluggastsitze insbesondere in einem Pitchabstand von 33 Zoll zueinander angeordnet. Der Pitchabstand wird dabei von einem Abstand der Aufständerung von zwei hintereinander angeordneten Fluggastsitzen gebildet. Der Pitchabstand wird dabei beispielsweise durch Messen des Abstands zweier gleicher Bauteile der beiden hintereinander angeordneten Sitze gemessen, beispielsweise durch Messen eines Abstands zwischen einer Vorderkante der Sitzbodeneinheit des vorderen Fluggastsitzes bis zu einer Vorderkante der Sitzbodeneinheit des hinteren Fluggastsitzes. Dabei wird parallel zu der Sitzrichtung der Fluggastsitze, vorzugsweise parallel zu einer Flugzeugkabinenlängsachse gemessen. Eine Überschneidung der Rückenlehneneinheit des vorderen Fluggastsitzes bis über eine Sitzbodeneinheit des hinteren Fluggastsitzes erfolgt dabei lediglich in der Komfortposition. In einer TTL-Position des vorderen Fluggastsitzes besteht insbesondere keine Überschneidung der Rückenlehneneinheit des vorderen Fluggastsitzes bis über eine Sitzbodeneinheit des hinteren Fluggastsitzes. Dadurch kann eine besonders vorteilhafte und platzsparende Anordnung von Fluggastsitzen in einem Layout erreicht werden.

Weiterhin wird vorgeschlagen, dass eine Überschneidung der Rückenlehneneinheit des vorderen Fluggastsitzes in einer Komfortposition mit der Sitzbodeneinheit des hinteren Fluggastsitzes zumindest 3,5 Zoll beträgt. Unter "zumindest 3,5 Zoll" soll dabei insbesondere zumindest 3,5 Zoll, vorteilhaft zumindest 4 Zoll und in einer besonders vorteilhaften Ausgestaltung zumindest 5 Zoll mm verstanden werden. Dabei beträgt die Überschneidung, insbesondere bei einem Pitchabstand zwischen den Fluggastsitzen von 33 Zoll, insbesondere zumindest 3,5 Zoll. Die Überschneidung der Rückenlehneneinheit des vorderen Fluggastsitzes mit der Sitzbodeneinheit des hinteren Fluggastsitzes in der Komfortposition beträgt dabei zumindest ein Fünftel, vorzugsweise zumindest ein Viertel einer Länge der Sitzbodeneinheit des hinteren Fluggastsitzes. Dabei ist eine Dadurch kann ein besonders vorteilhaft kompaktes Layout bereitgestellt werden.

Die erfindungsgemäße Sitzvorrichtung soll hierbei nicht auf die oben beschriebene Anwendung und Ausführungsform beschränkt sein. Insbesondere kann die erfindungsgemäße Sitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Fluggastsitzes mit einer erfindungsgemäßen Sitzvorrichtung in einem ersten Ausführungsbeispiel,
- Fig. 2: eine Detailansicht der Sitzvorrichtung mit einer Armlehneneinheit und einem Abstützelement,
- Fig. 3: eine weitere Detailansicht der Sitzvorrichtung mit einer Armlehneneinheit und einem Abstützelement,
- Fig. 4: eine schematische Ansicht des Fluggastsitzes ohne ein Polsterelement einer Sitzbodeneinheit,
- Fig. 5: eine schematische Seitenansicht der Sitzvorrichtung,
- Fig. 6: eine schematische Seitenansicht der Sitzvorrichtung in einer als Grundposition ausgebildeten Komfortposition,
- Fig. 7: eine schematische Seitenansicht der Sitzvorrichtung in einer TTL-Position,
- Fig. 8: eine schematische Detailansicht einer Lagereinheit der Rückenlehneneinheit,
- Fig. 9: ein erfindungsgemäßes Layout mit mehreren Fluggastsitzen mit der erfindungsgemäßen Sitzvorrichtung,
- Fig. 10: eine schematische Darstellung von zwei in einer Sitzreihe nebeneinander angeordneten Fluggastsitzen mit der erfindungsgemäßen Sitzvorrichtung und
- Fig. 11: eine schematische Schnittansicht der Sitzvorrichtung,
- Fig. 12: eine schematische Darstellung eines Fluggastsitzes mit einer erfindungsgemäßen Sitzvorrichtung in einem zweiten Ausführungsbeispiel,
- Fig. 13: eine schematische Darstellung des Fluggastsitzes mit einer angedeuteten Verriegelungseinheit und einer Betätigungseinheit und
- Fig. 14: eine schematische Darstellung des Fluggastsitzes von hinten mit einer Tischeinheit.

### Beschreibung der Ausführungsbeispiele

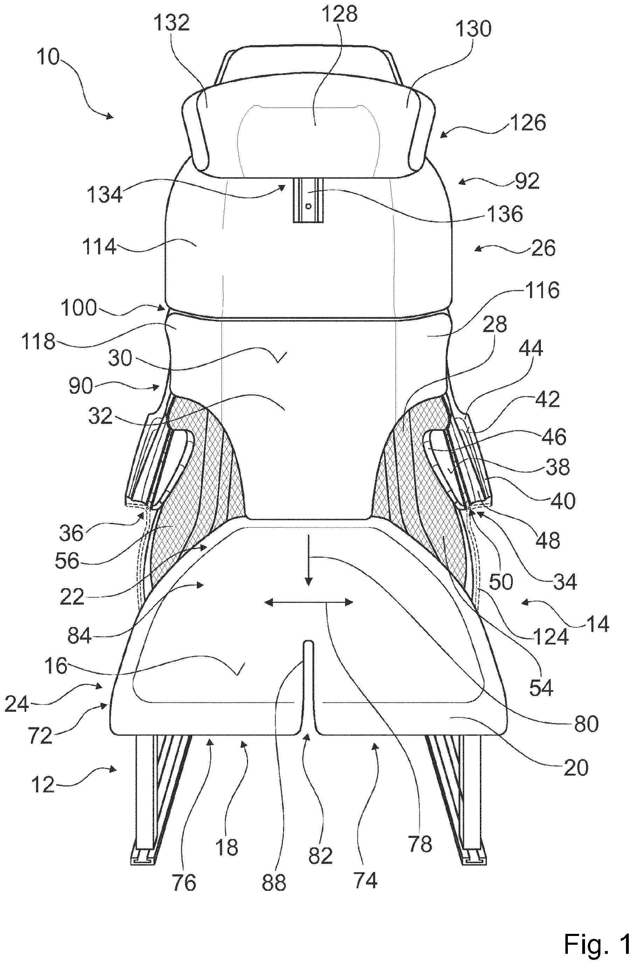

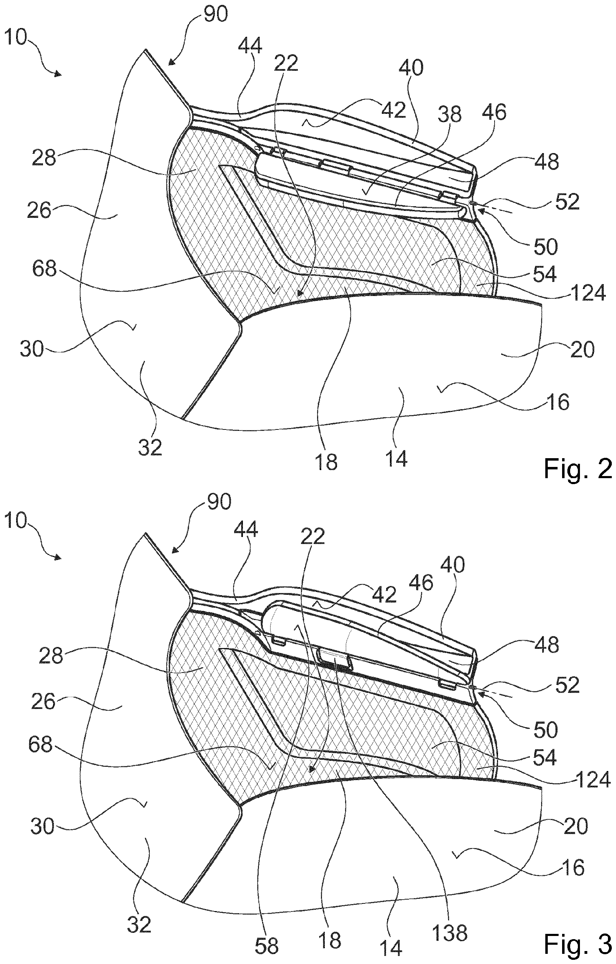

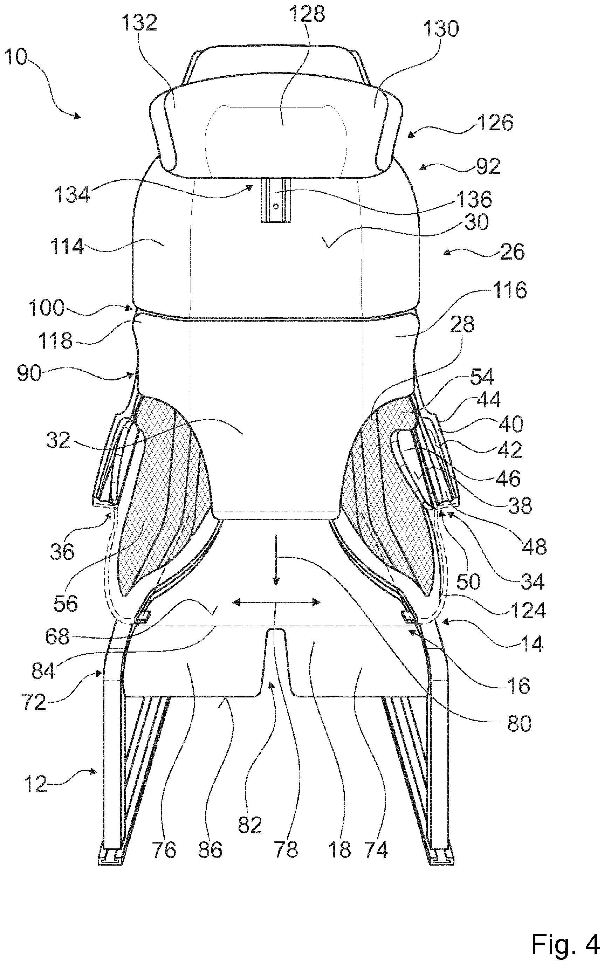

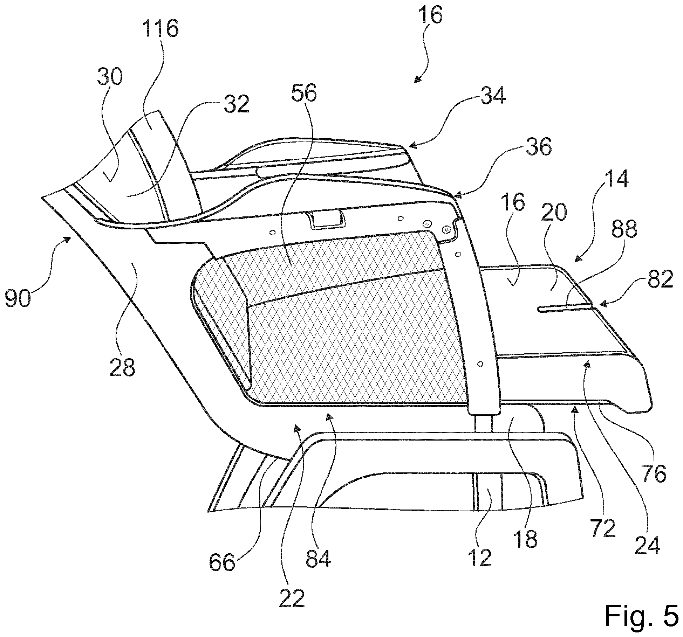

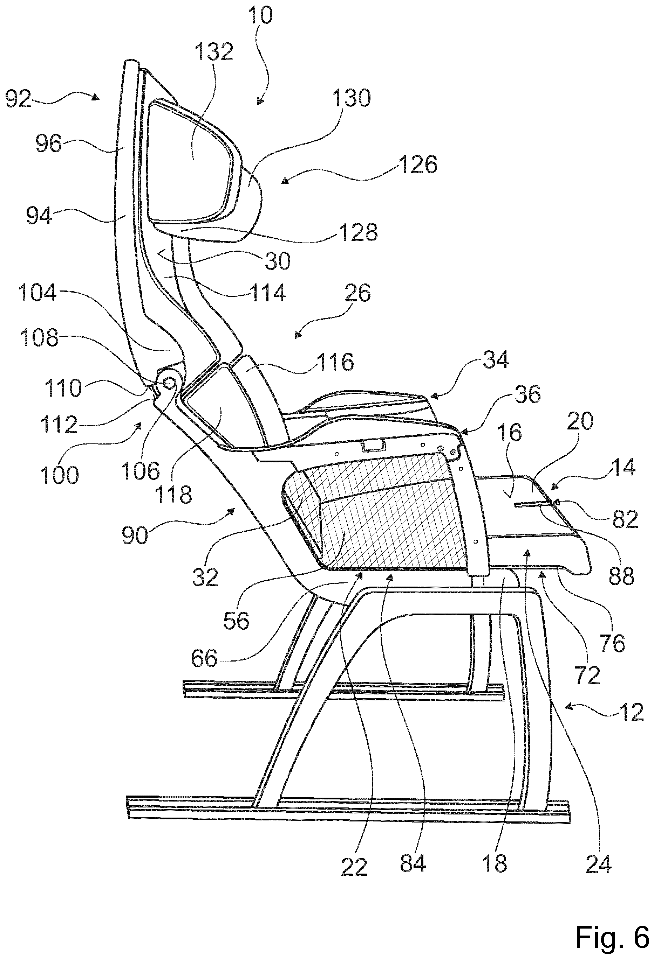

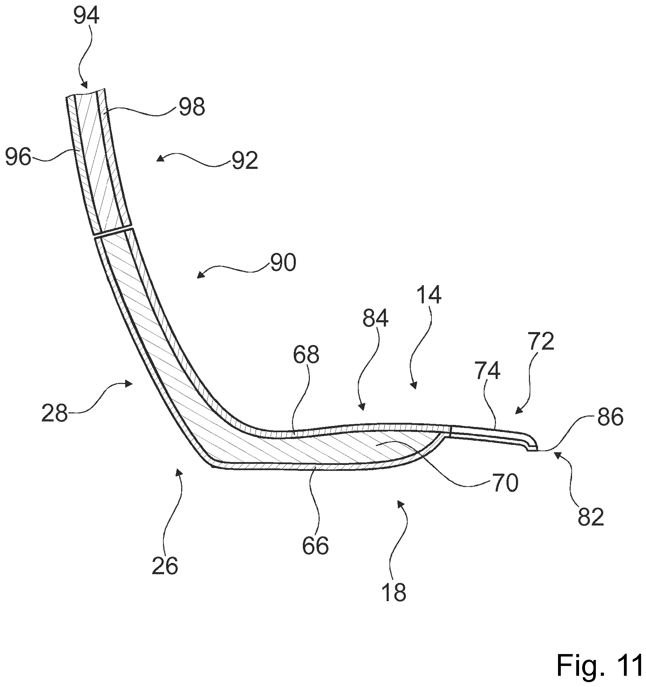

Die Figuren 1 bis 11 zeigen eine erfindungsgemäße Sitzvorrichtung in einem ersten Ausführungsbeispiel. Die Sitzvorrichtung ist als eine Fluggastsitzvorrichtung ausgebildet. Die Sitzvorrichtung ist als Teil eines Sitzes, insbesondere als Teil eines Fluggastsitzes 10, ausgebildet. Der Fluggastsitz 10 ist in einem montierten Zustand in einer Passagierkabine eines Flugzeugs angebracht. Die Passagierkabine weist einen Kabinenboden auf, auf dem der Fluggastsitz 10 aufgeständert ist. Der Kabinenboden bildet eine Aufständerebene für den Fluggastsitz 10 aus. In der Passagierkabine sind mehrere Fluggastsitze 10, 60, 62 mit der erfindungsgemäßen Sitzvorrichtung angeordnet. Die Fluggastsitze 10, 60, 62 sind dabei in einem im Folgenden beschriebenen Layout in der Passagierkabine angeordnet. Die Fluggastsitze 10, 60 sind zusammen in einer Sitzreihe 64 nebeneinander angeordnet. Die Sitzreihe 64 ist jeweils von drei nebeneinander angeordneten Fluggastsitzen 10, 60 gebildet, wobei eine in den Zeichnungen nicht näher dargestellt ist. Grundsätzlich wäre es auch denkbar, dass die Sitzreihe 64 eine andere Anzahl an Fluggastsitzen 10, 60 aufweist oder dass die Fluggastsitze 10, 60 als Einzelsitze ausgebildet sind, die nicht in einer Sitzreihe angeordnet sind. Im Folgenden wird lediglich ein Fluggastsitz 10 mit der erfindungsgemäßen, als Fluggastsitzvorrichtung ausgebildeten Sitzvorrichtung beschrieben. Die Sitzvorrichtung weist eine Aufständereinheit 12 auf. Die Aufständereinheit 12 ist dazu vorgesehen, den Fluggastsitz 10 und die weiteren Fluggastsitze 60 derselben Sitzreihe 64 auf dem Kabinenboden aufzuständern. Die Aufständereinheit 12 umfasst mehrere, nicht näher dargestellte Verbindungselemente, die die Aufständereinheit 12 fest mit dem Kabinenboden koppeln. Dabei sind die Verbindungselemente vorzugsweise dazu vorgesehen, formschlüssig in einer Befestigungsschiene des Kabinenbodens angeordnet zu sein und zur festen Anbindung der Sitzreihe 64 in der Befestigungsschiene fixiert zu werden.

Die Sitzvorrichtung umfasst eine Sitzbodeneinheit 14. Die Sitzbodeneinheit 14 ist dazu vorgesehen, einen Sitzbereich 16 bereitzustellen, auf dem ein Passagier, insbesondere während eines Flugs, sitzen kann. Der Sitzbereich 16 bildet eine Sitzfläche aus, auf der der Passagier sitzt. Die Sitzbodeneinheit 14 ist mit der Aufständereinheit 12 verbunden. Die Sitzbodeneinheit 14 ist starr mit der Aufständereinheit 12 verbunden. Grundsätzlich ist es auch denkbar, dass die Sitzbodeneinheit 14 über eine Kinematik verschwenkbar mit der Aufständereinheit 12 verbunden ist. Die Sitzbodeneinheit 14 umfasst einen Grundkörper 18. Der Grundkörper 18 der Sitzbodeneinheit 14 ist mit der Aufständereinheit 12 verbunden. Der Grundkörper 18 ist zumindest teilweise aus einem Faserverbundwerkstoff gebildet. Grundsätzlich ist es auch denkbar, dass der Grundkörper 18 aus einem anderen Material, wie beispielsweise aus einem Metall, gebildet ist.

Der Grundkörper 18 weist einen vorderen Bereich 72 auf. Der vordere Bereich 72 des Grundkörpers 18 bildet dabei in etwa ein Drittel des Grundkörpers 18 aus. Der vordere Bereich 72 ist dabei, in Sitzrichtung 80 gesehen, an einem vorderen Ende der Sitzbodeneinheit 14 angeordnet. Der vordere Bereich 72 ist einer Front des Fluggastsitzes 10 zugewandt. In dem vorderen Bereich 72 weist der Grundkörper 18 zwei in einer Querrichtung 78 voneinander getrennt ausgebildete Teilbereiche 74, 76 auf. Die Querrichtung 78 verläuft dabei orthogonal zu der Sitzrichtung 80 und zu einer Vertikalrichtung. Die zwei voneinander getrennt ausgebildeten Teilbereiche 74, 76 sind in einer Höhe zueinander beweglich. Die zwei voneinander getrennt ausgebildeten Teilbereiche 74, 76 sind in der Vertikalrichtung zueinander beweglich. Die beiden Teilbereiche 74, 76 können unabhängig voneinander bewegt werden. Die zwei voneinander in Querrichtung 78 getrennten Teilbereiche 74, 76 sind aus einem flexiblen Material gebildet. Grundsätzlich wäre es auch denkbar, dass die Teilbereiche 74, 76 lediglich teilweise aus einem flexiblen Material gebildet sind, wobei ein Rest der Teilbereiche 74, 76 dabei jeweils starr ausgebildet wäre. Die beiden Teilbereiche 74, 76 weisen gleiche Abmessungen auf. Eine Erstreckung des Teilbereichs 74 in Sitzrichtung 80 und eine Erstreckung des Teilbereichs 76 in Sitzrichtung 80 sind gleich groß. Eine Erstreckung des Teilbereichs 74 in Querrichtung 78 und eine Erstreckung des Teilbereichs 76 in Querrichtung 78 sind gleich groß.

Der Grundkörper 18 weist in seinem vorderen Bereich 72 einen Schlitz 82 auf. Der Schlitz 82 trennt die beiden Teilbereiche 74, 76 räumlich voneinander ab. Der Schlitz 82 ist dabei in Querrichtung 78 mittig in dem Grundkörper 18 angeordnet. Der Schlitz 82 weist eine Breite von 20 mm auf. Grundsätzlich ist es auch denkbar, dass der Schlitz 82 schmäler oder breiter ausgebildet ist. Der Schlitz 82 erstreckt sich von einem vorderen Ende 86 des Grundkörpers 18 bis an ein hinteres Ende des vorderen Bereichs 72. Durch den Schlitz 82 sind die beiden Teilbereiche 74, 76 voneinander abgetrennt und können sich unabhängig voneinander bewegen. Grundsätzlich ist es denkbar, dass der Schlitz 82 zwischen den beiden Teilbereichen 74, 76 zur Verletzungsminimierung durch ein Sicherheitselement überdeckt ist. Dabei ist das Sicherheitselement aus einem flexiblen und/oder elastischen Material gebildet, das eine Beweglichkeit der beiden Teilbereiche 74, 76 in einem montierten Zustand nicht verhindert. Dabei ist es beispielsweise denkbar, dass das Sicherheitselement von einem dünnen, elastischen Textil oder Kunststoff gebildet ist. Durch das Sicherheitselement soll verhindert werden, dass sich ein Passagier zwischen den beweglichen Teilbereichen 74, 76 quetschen oder einklemmen kann.

Der Grundkörper 18 weist einen hinteren Bereich 84 auf. Der hintere Bereich 84 ist starrer ausgebildet als der vordere Bereich 72, in dem der Grundkörper 18 die zueinander beweglichen Teilbereiche 74, 76 ausbildet. Der hintere Bereich 84 bildet dabei den von dem vorderen Bereich 72 unterschiedlichen Teil des Grundkörpers 18 aus. Der hintere Bereich 84 ist dabei im Wesentlichen unelastisch ausgebildet. Über den hinteren Bereich 84 sind die beiden getrennt voneinander ausgebildeten Teilbereiche 74, 76 miteinander verbunden. Der Schlitz 82, der die beiden Teilbereiche 74, 76 in dem vorderen Bereich 72 voneinander trennt, reicht von dem vorderen Ende 86 des Grundkörpers 18 bis an einen Übergang von dem vorderen Bereich 72 zu dem hinteren Bereich 84. Ein hinteres Ende des Schlitzes 82 markiert den Übergang zwischen dem vorderen Bereich 72 und dem hinteren Bereich 84. Der hintere Bereich 84 und die zumindest zwei beweglich zueinander ausgebildeten Teilbereiche 74, 76 sind einstückig miteinander ausgebildet. Ein Übergang zwischen dem hinteren Bereich 84 und dem jeweiligen Teilbereich 74, 76 ist eben.

Zur einstückigen Ausbildung des hinteren Bereichs 84 und der beiden Teilbereiche 74, 76 umfasst der Grundkörper 18 eine dünnwandige Rückwand 66. Die dünnwandige Rückwand 66 ist als eine untere Wandung des Grundkörpers 18 ausgebildet. Die dünnwandige Rückwand 66 ist aus einem Faserverbundwerkstoff gebildet. Dabei ist die Rückwand 66 von einer geformten CFK-Platte gebildet. Grundsätzlich ist es auch denkbar, dass die dünnwandige Rückwand 66 aus einem anderen, dem Fachmann als sinnvoll erscheinenden Faserverbundwerkstoff gebildet ist. Die dünnwandige Rückwand 66 weist dabei eine Dicke von etwa 2 mm auf. Die dünnwandige Rückwand 66 schließt den Grundkörper 18 und damit die Sitzbodeneinheit 14 nach unten hin ab. Die dünnwandige Rückwand 66 des Grundkörpers 18 ist dabei der unter der Sitzbodeneinheit 14 angeordneten Aufständereinheit 12 zugewandt. Die dünnwandige Rückwand 66 des Grundkörpers 18 weist einen nicht näher dargestellten Anbindungsbereich auf, über den der Grundkörper 18 und damit die Sitzbodeneinheit 14 mit der Aufständereinheit 12 verbunden ist.

Zur einstückigen Ausbildung des hinteren Bereichs 84 und der beiden Teilbereiche 74, 76 umfasst der Grundkörper 18 weiter eine dünnwandige Frontwand 68. Die dünnwandige Frontwand 68 ist als eine obere Wandung des Grundkörpers 18 ausgebildet. Die dünnwandige Frontwand 68 ist mit der dünnwandigen Rückwand 66 des Grundkörpers 18 verbunden. Die dünnwandige Frontwand 68 ist aus einem Faserverbundwerkstoff gebildet. Die dünnwandige Frontwand 68 ist dabei aus einem gleichen Material gebildet wie die dünnwandige Rückwand 66. Die dünnwandige Frontwand 68 weist dabei eine Dicke von etwa 2 mm auf. Die dünnwandige Frontwand 68 ist an einer Oberseite des Grundkörpers 18 angeordnet. Die dünnwandige Frontwand 68 des Grundkörpers 18 ist nach oben ausgerichtet. Die dünnwandige Frontwand 68 des Grundkörpers 18 bildet den Sitzbereich 16 aus.

Der Grundkörper 18 umfasst ein Versteifungselement 70. Das Versteifungselement 70 ist zur Versteifung des Grundkörpers 18 und damit zur Versteifung der Sitzbodeneinheit 14 vorgesehen. Dazu ist das Versteifungselement 70 zwischen der dünnwandigen Rückwand 66 und der dünnwandigen Frontwand 68 des Grundkörpers 18 angeordnet. Die dünnwandige Rückwand 66 und die dünnwandige Frontwand 68 schließen das Versteifungselement 70 ein. Die dünnwandige Rückwand 66 und die dünnwandige Frontwand 68 sind in den Bereichen, in denen sie beabstandet zueinander angeordnet sind, über das Versteifungselement 70 miteinander verbunden. Das Versteifungselement 70 ist mit der dünnwandigen Rückwand 66 verklebt. Das Versteifungselement 70 ist mit der dünnwandigen Frontwand 68 verklebt. Das Versteifungselement 70 ist als ein Schaumkern ausgebildet.

Die dünnwandige Rückwand 66 und die dünnwandige Frontwand 68 des Grundkörpers 18 sind miteinander verbunden. Die dünnwandige Frontwand 68 und die dünnwandige Rückwand 66 weisen dabei in einem umlaufenden Außenstreifen jeweils einen Verbindungsbereich auf, in dem die dünnwandige Frontwand 68 und die dünnwandige Rückwand 66 miteinander verbunden sind. Dabei sind die dünnwandige Frontwand 68 und die dünnwandige Rückwand 66 stoffschlüssig miteinander verbunden. Die dünnwandige Frontwand 68 und die dünnwandige Rückwand 66, die jeweils aus einem Faserverbundwerkstoff gebildet sind, sind dabei vorzugsweise in einem Herstellungsverfahren, insbesondere in einem Laminierverfahren, miteinander verbunden. Grundsätzlich ist es auch denkbar, dass die dünnwandige Frontwand 68 und die dünnwandige Rückwand 66 nachträglich über eine geeignete Form-, Kraft- und/oder Stoffschlussverbindung in ihren Verbindungsbereichen miteinander fest verbunden sind. Dabei wäre es beispielsweise denkbar, dass die dünnwandige Frontwand 68 und die dünnwandige Rückwand 66 in ihren Verbindungsbereichen über eine Klebeverbindung miteinander verbunden sind. Grundsätzlich wäre es auch denkbar, dass die dünnwandige Frontwand 68 und die dünnwandige Rückwand 66 in ihren Verbindungsbereichen über geeignete Formschlusselemente, wie beispielsweise Rastelemente, miteinander verbunden sind. Grundsätzlich wäre es ebenso denkbar, dass die dünnwandige Frontwand 68 und die dünnwandige Rückwand 66 in ihren Verbindungsbereichen über zusätzliche Seitenteile verbunden sind, die wahlweise nachträglich mit der dünnwandigen Frontwand 68 und der dünnwandigen Rückwand 66 verklebt sind oder die schon von Vornherein mit der dünnwandigen Frontwand 68 und der dünnwandigen Rückwand 66 laminiert sind.

In dem hinteren Bereich 84 sind die dünnwandige Frontwand 68 und die dünnwandige Rückwand 66, abgesehen von den Verbindungsbereichen, in denen die dünnwandige Frontwand 68 und die dünnwandige Rückwand 66 miteinander verbunden sind und so ineinander übergehen, beabstandet zueinander angeordnet. Dadurch bilden die dünnwandige Frontwand 68 und die dünnwandige Rückwand 66 in dem hinteren Bereich 84 einen Zwischenraum aus. In dem Zwischenraum, der in dem hinteren Bereich 84 von der dünnwandigen Frontwand 68 und der dünnwandigen Rückwand 66 aufgespannt wird, ist das als Schaumkern ausgebildete Versteifungselement 70 angeordnet. Durch das Versteifungselement 70 ist der hintere Bereich 84 ausgesteift. In den zwei Teilbereichen 74, 76 sind die dünnwandige Frontwand 68 und die dünnwandige Rückwand 66 direkt und flächig miteinander verbunden. Der Grundkörper 18 weist in den zwei Teilbereichen 74, 76 lediglich die dünnwandige Frontwand 68 und die dünnwandige Rückwand 66 auf. Da in den Teilbereichen 74, 76 lediglich die dünnwandige Frontwand 68 und die dünnwandige Rückwand 66 miteinander verbunden sind, ohne dass sie ein Versteifungselement einschließen, sind die Teilbereiche 74, 76 wesentlich flexibler ausgebildet als der hintere Bereich 84. Die Teilbereiche 74, 76 weisen eine Grundposition auf, in der beide eine gleiche Ausrichtung zu dem hinteren Bereich 84 aufweisen. Die Grundposition bildet eine unausgelenkte Position der Teilbereiche 74, 76 aus, in der im Wesentlichen keine äußere Kraft, insbesondere keine durch einen auf dem Fluggastsitz 10 sitzenden Passagier verursachte Kraft, auf die Teilbereiche 74, 76 wirkt. In der Grundposition sind die Teilbereiche 74, 76 in etwa parallel zu dem hinteren Bereich 84 ausgerichtet. Werden die Teilbereiche 74, 76 durch eine äußere Kraft, beispielsweise durch eine von einem auf dem Fluggastsitz 10 sitzenden Passagier verursachte Kraft, ausgelenkt, wird in den Teilbereichen 74, 76 durch die elastische Verformung der Teilbereiche 74, 76 eine innere Spannung erzeugt, die eine Rückstellkraft ausbildet. Durch die Rückstellkraft werden die Teilbereiche 74, 76 nach einem Wegfall einer Kraft, die zur Auslenkung geführt hat, wieder in ihre jeweilige Grundposition zurückgestellt. Die bei einer Verstellung erzeugte Rückstellkraft bildet eine Gegenkraft, die der Kraft entgegenwirkt, die die Verstellung bewirkt. Durch eine Einstellung einer Steifigkeit der Teilbereiche 74, 76 durch Variation einer Dicke der dünnwandigen Frontwand 68 oder der dünnwandigen Rückwand 66 oder durch Einsetzen eines Versteifungselements können ein Verstellbereich und eine Nachgiebigkeit der Teilbereiche 74, 76 eingestellt werden. Durch die Teilbereiche 74, 76, die sich unterschiedlich zueinander aus ihrer Ruhestellung bewegen, kann sich der Sitzbereich 16 vorteilhaft an eine Sitzposition des auf dem Fluggastsitz 10 sitzenden Passagiers anpassen. Je nachdem, wie der Passagier sein Gewicht, insbesondere in dem vorderen Bereich 72, verlagert, geben die Teilbereiche 74, 76 unterschiedlich stark nach. Dadurch kann in einer Situation, in der sich der Passagier auf eine Seite des Fluggastsitzes 10 anlehnt, der Teilbereich 74, 76, der auf der entsprechenden Seite des Fluggastsitzes 10 angeordnet ist, vorteilhaft weiter nachgeben und eine Belastung auf das Körperteil, welches auf dem entsprechenden Teilbereich 74, 76, beispielsweise auf einem Oberschenkel, aufliegt, entlasten. Dadurch kann von dem Passagier eine besonders komfortable Position eingenommen werden. Insbesondere in einem Seitenschlaf, in dem ein Gewicht des Passagiers einseitig auf der Sitzbodeneinheit 14 angeordnet ist, kann der Sitzboden durch die nachgiebigen Teilbereiche 74, 76 vorteilhaft komfortabel ausgestaltet werden.

Die Sitzbodeneinheit 14 umfasst ein Polsterelement 20. Das Polsterelement 20 ist fest mit dem Grundkörper 18 der Sitzbodeneinheit 14 verbunden. Das Polsterelement 20 ist aus einem Schaumstoff gebildet. Grundsätzlich ist es auch denkbar, dass das Polsterelement 20 aus einem anderen, dem Fachmann als sinnvoll erscheinenden, zumindest teilweise elastischen Material gebildet ist. Das Polsterelement 20 ist dabei von einem nicht näher dargestellten Bezug überzogen, der abnehmbar mit dem Polsterelement 20 verbunden ist. Der Bezug kann zum Wechseln einfach von dem Polsterelement 20 entfernt werden. Dabei ist es denkbar, dass der Bezug sowohl über das Polsterelement 20 als auch teilweise über den Grundkörper 18 gezogen ist. Für die weitere Beschreibung des Polsterelements 20 soll dabei implizit der Bezug mit verstanden werden. Das Polsterelement 20 bildet den Sitzbereich 16 der Sitzbodeneinheit 14 aus. Der Sitzbereich 16 weist einen hinteren Bereich 22 und einen vorderen Bereich 24 auf. Der vordere Bereich 24 des Sitzbereichs 16 ist an einem, in Sitzrichtung 80 des Fluggastsitzes 10 gesehen, vorderen Ende der Sitzbodeneinheit 14 angeordnet. Der hintere Bereich 22 der Sitzbodeneinheit 14 ist, in Sitzrichtung 80 gesehen, an einem hinteren Ende der Sitzbodeneinheit 14 angeordnet. Der Sitzbereich 16 bildet in dem hinteren Bereich 22 eine Verjüngung aus. Das Polsterelement 20 ist in dem hinteren Bereich 22 schmäler ausgebildet als in dem vorderen Bereich 24. Eine Sitzfläche, die der Sitzbereich 16 ausbildet, ist in dem hinteren Bereich 22 schmäler als in einem vorderen Bereich 24. Eine Breite des Sitzbereichs 16 in dem vorderen Bereich 24 beträgt 450 mm. Grundsätzlich ist es denkbar, dass die Breite des Sitzbereichs 16 in dem vorderen Bereich 24 zwischen 400 mm und 600 mm liegt. Eine minimale Breite des Sitzbereichs 16 in dem hinteren Bereich 22 beträgt 250 mm. Grundsätzlich ist es denkbar, dass die Breite des Sitzbereichs 16 in dem hinteren Bereich 22 zwischen 200 mm und 450 mm liegt. Die minimale Breite des Sitzbereichs 16 in dem vorderen Bereich 24 ist um wenigstens 30 % größer als die minimale Breite des Sitzbereichs 16 in dem hinteren Bereich 22. Dabei nimmt die Breite des hinteren Bereichs 22 des Sitzbereichs 16 entgegen der Sitzrichtung 80 stetig ab. Eine Abnahme der Breite des hinteren Bereichs 22 ist dabei nicht gleichmäßig. Grundsätzlich ist es allerdings auch denkbar, dass die Abnahme der Breite des hinteren Bereichs 22 stetig verläuft. Der hintere Bereich 22 des Sitzbereichs 16 bildet in etwa das hintere Drittel des Sitzbereichs 16 aus. Das Polsterelement 20 weist an einem vorderen Ende einen Schlitz 88 auf, der in einem montierten Zustand deckungsgleich mit dem Schlitz 82 des Grundkörpers 18 verläuft. Dadurch weist auch das Polsterelement 20 in seinem vorderen Bereich zwei voneinander getrennte Teilbereiche 74, 76 auf, die unabhängig voneinander bewegt werden können. Grundsätzlich ist es aber auch denkbar, dass das Polsterelement 20 keinen Schlitz 88 aufweist und ein durchgehendes vorderes Ende ausbildet.

Die Sitzvorrichtung umfasst eine Rückenlehneneinheit 26. Die Rückenlehneneinheit 26 ist dazu vorgesehen, dass sich ein auf dem Fluggastsitz 10 sitzender Passagier mit seinem Rücken anlehnen kann. Die Rückenlehneneinheit 26 ist an dem hinteren Ende der Sitzbodeneinheit 14 angebracht. Die Rückenlehneneinheit 26 begrenzt den Sitzbereich 16 nach hinten. Die Rückenlehneneinheit 26 ist starr mit der Sitzbodeneinheit 14 verbunden. Grundsätzlich ist es auch denkbar, dass die Rückenlehneneinheit 26 und die Sitzbodeneinheit 14 über eine Kinematik verschwenkbar miteinander verbunden sind.

Die Rückenlehneneinheit 26 umfasst einen starren Teilbereich 90. Der starre Teilbereich 90 ist als ein unterer Bereich der Rückenlehneneinheit 26 ausgebildet. Der untere starre Teilbereich 90 ist der Sitzbodeneinheit 14 zugewandt. Der untere Teilbereich 90 der Rückenlehneneinheit 26 bildet einen ersten Grundkörper 28 der Rückenlehneneinheit 26 aus. Der Grundkörper 28 der Rückenlehneneinheit 26 bildet dabei teilweise eine tragende Struktur der Rückenlehneneinheit 26 aus. Der erste Grundkörper 28 der Rückenlehneneinheit 26 ist einstückig mit dem Grundkörper 18 der Sitzbodeneinheit 14 ausgebildet. Dabei ist der Grundkörper 28 des unteren starren Teilbereichs 90 von der dünnwandigen Rückwand 66, der dünnwandigen Frontwand 68 und dem zwischen der dünnwandigen Rückwand 66 und der dünnwandigen Frontwand 68 angeordneten Versteifungselement 70 ausgebildet. Dabei erstreckt sich die dünnwandige Frontwand 68 in einem Bereich des unteren Teilbereichs 90 der Rückenlehneneinheit 26 auf einer Vorderseite der Rückenlehneneinheit 26 von der Sitzbodeneinheit 14 nach oben. Die dünnwandige Rückwand 66 zeigt in einem Bereich des unteren Teilbereichs 90 der Rückenlehneneinheit 26 auf einer Rückseite der Rückenlehneneinheit 26 von der Sitzbodeneinheit 14 nach oben. Dabei sind Übergänge der dünnwandigen Frontwand 68 und der dünnwandigen Rückwand 66 zwischen der Rückenlehneneinheit 26 und der Sitzbodeneinheit 14 jeweils von Radien gebildet. Durch die einstückige Ausbildung der Grundkörper 18, 28 der Sitzbodeneinheit 14 und des unteren Teilbereichs 90 der Rückenlehneneinheit 26 sind die Sitzbodeneinheit 14 und der untere Teilbereich 90 der Rückenlehneneinheit 26 starr miteinander verbunden. Die Sitzbodeneinheit 14 und der untere Teilbereich 90 der Rückenlehneneinheit 26 weisen einen festen, unveränderbaren Winkel zueinander auf. Durch den Winkel, den die Sitzbodeneinheit 14 und der untere Teilbereich 90 der Rückenlehneneinheit 26 zueinander aufweisen, ist ein Sitzwinkel zwischen der Rückenlehneneinheit 26 und die Sitzbodeneinheit 14 in einer Grundposition definiert. Der Sitzwinkel zwischen der Rückenlehneneinheit 26 und der Sitzbodeneinheit 14 beträgt dabei 130 Grad.

Grundsätzlich wäre es auch denkbar, dass der Grundkörper 28, der den unteren Teilbereich 90 der Rückenlehneneinheit 26 von dem Grundkörper 18 der Sitzbodeneinheit 14 bildet, separat ausgebildet ist. Dabei wäre es denkbar, dass der Grundkörper 28 der Rückenlehneneinheit 26 ebenfalls in einer Sandwichbauweise aufgebaut ist und aus einer dünnwandigen Frontwand, einer dünnwandigen Rückwand sowie einem Versteifungselement besteht. Der getrennt von dem Grundkörper 18 der Sitzbodeneinheit 14 ausgebildete erste Grundkörper 28 der Rückenlehneneinheit 26 würde dabei während einer Montage mittels einer dem Fachmann als sinnvoll erscheinenden Verbindungsart, beispielsweise einer Schraubenverbindung, fest und starr mit dem Grundkörper 18 der Sitzbodeneinheit 14 verbunden werden. In einer solchen Ausgestaltung der Grundkörper 18 , 28 wäre auch eine schwenkbare Verbindung zwischen den Grundkörpern 18, 28 denkbar. Grundsätzlich ist es auch denkbar, dass der Grundkörper 28 aus einem anderen, dem Fachmann als sinnvoll erscheinenden Material, wie beispielsweise einem Metall, gebildet ist.

Die Rückenlehneneinheit 26 weist einen oberen Teilbereich 92 auf. Der obere Teilbereich 92 ist schwenkbar zu dem unteren Teilbereich 90 ausgebildet. Die Rückenlehneneinheit 26 weist einen zweiten Grundkörper 94 auf, der den oberen Teilbereich 92 ausbildet. Der Grundkörper 94 ist dabei im Wesentlichen aus einem Faserverbundwerkstoff gebildet. Der Grundkörper 94 ist in einer Sandwichbauweise ausgestaltet. Dabei weist der Grundkörper 94 eine dünnwandige Rückwand 96, eine dünnwandige Frontwand 98 und ein darin eingeschlossenes, nicht näher dargestelltes Versteifungselement auf. Ein Aufbau des Grundkörpers 94 entspricht dabei in etwa dem des Grundkörpers 18 der Sitzbodeneinheit 14. Grundsätzlich ist es auch denkbar, dass der Grundkörper 94 aus einem anderen, dem Fachmann als sinnvoll erscheinenden Material, wie beispielsweise einem Metall, gebildet ist.

Die Rückenlehneneinheit 26 umfasst eine Lagereinheit 100. Über die Lagereinheit 100 sind der untere Teilbereich 90 und der obere Teilbereich 92 zueinander schwenkbar. Die Lagereinheit 100 verbindet den ersten Grundkörper 28 der Rückenlehneneinheit 26, der den unteren Teilbereich 90 ausbildet, schwenkbar mit dem zweiten Grundkörper 94 der Rückenlehneneinheit 26. Dabei weist die Lagereinheit 100 einen maximalen Schwenkbereich von etwa 35 Grad auf, um den der untere Teilbereich 90 und der obere Teilbereich 92 zueinander verschwenkbar sind. Grundsätzlich ist auch ein Schwenkbereich von 40 bis 50 Grad möglich. Die Lagereinheit 100, die den starren unteren Teilbereich 92 mit dem oberen schwenkbaren Teilbereich 92 lagert, weist eine Schwenkachse 102 auf. Die Schwenkache 102 ist im Bezug auf ein hinteres Ende der Rückenlehneneinheit 26 in Sitzrichtung 80 nach vorne versetzt. Die Schwenkache 102 ist, in der Sitzrichtung 80 gesehen, vor der dünnwandigen Rückwand 96 bzw. der dünnwandigen Rückwand 66 angeordnet. Die Schwenkache 102 ist, in der Sitzrichtung 80 gesehen, vor der dünnwandigen Frontwand 68, 98 bzw. der dünnwandigen Rückwand 66, 96 angeordnet.

Zur Ausbildung der Lagereinheit 100 bilden der erste Grundkörper 28 und der zweite Grundkörper 94 in ihren Außenbereichen an einander zugewandten Seiten jeweils eine sich in Sitzrichtung 80 erstreckende Erhöhung 104, 106 aus. In dem Bereich der Lagereinheit 100, in dem die Grundkörper 28, 94 die Erhöhungen 104, 106 ausbilden, überlappen sich die beiden Grundkörper 28, 94. In den Erhöhungen 104, 106 bilden die Grundkörper 28, 94 jeweils nicht näher dargestellte Lageraufnahmen aus. Die Lageraufnahmen sind über ein Lagerelement 108 miteinander verbunden. Das Lagerelement 108 ist dabei als ein Lagerbolzen ausgebildet. Grundsätzlich ist es auch denkbar, dass das Lagerelement 108 als ein anderes, dem Fachmann als sinnvoll erscheinendes Lagerelement ausgebildet ist. Über das Lagerelement 108 können der Grundkörper 28 und der Grundkörper 94 zueinander verschwenkt werden. Grundsätzlich ist es auch denkbar, dass die Lagereinheit 100 auf eine andere, dem Fachmann als sinnvoll erscheinende Art und Weise ausgebildet ist. Die Lagereinheit 100 weist mehrere Anschlagselemente 110, 112 auf, die den unteren Teilbereich 90 und den oberen Teilbereich 92 auf ihre Maximalstellungen zueinander begrenzen. Dabei ist ein Anschlagselement 110 von dem Grundkörper 94, der den oberen Teilbereich 92 ausbildet, gebildet. Das Anschlagselement 112 ist von dem Grundkörper 28, der den unteren Teilbereich 90 ausbildet, gebildet. In einer Komfortposition, die als Grundposition ausgebildet ist, liegen die beiden Anschlagselemente 110, 112 aneinander an und fixieren den unteren Teilbereich 90 und den oberen Teilbereich 92 der Rückenlehneneinheit 26 dabei zueinander. Die Lagereinheit 100 weist weitere, nicht näher dargestellte Anschlagselemente auf, die in einer TTL-Position der Rückenlehneneinheit 26 einander kontaktieren und den unteren Teilbereich 90 und den oberen Teilbereich 92 der Rückenlehneneinheit 26 dabei in der TTL-Position zueinander fixieren.

Die Rückenlehneneinheit 26 bildet eine Rückenlehnenauflagefläche 30 aus. Zur Ausbildung der Rückenlehnenauflagefläche 30 umfasst die Rückenlehneneinheit 26 ein erstes Polsterelement 32 und ein zweites Polsterelement 114. Das erste Polsterelement 32 ist auf einer Vorderseite des ersten Grundkörpers 28 der Rückenlehneneinheit 26 angebracht. Das erste Polsterelement 32 bildet die Rückenlehnenauflagefläche 30 in dem unteren Teilbereich 90 der Rückenlehneneinheit 26 aus. Zur Anbindung des Polsterelements 32 an den Grundkörper 28 weist die Rückenlehneneinheit 26 mehrere, nicht näher dargestellte Anbindungselemente auf, die korrespondierend in den Grundkörper 28 und das Polsterelement 32 integriert sind. Die Anbindungselemente sind dabei als Flausch- und Hakenbänder ausgebildet. Grundsätzlich ist es auch denkbar, dass die nicht näher dargestellten Anbindungselemente auf eine andere, dem Fachmann als sinnvoll erscheinende Weise als Form- und/oder Kraftschlusselemente ausgebildet sind, wie beispielsweise Druckknöpfe. Das Polsterelement 32 ist aus einem elastischen Material, wie insbesondere aus einem aufgeschäumten Kunststoff, gebildet. Grundsätzlich ist es auch denkbar, dass das Polsterelement 32 aus einem anderen, dem Fachmann als sinnvoll erscheinenden elastischen Kunst- und/oder Naturstoff gebildet ist. Das Polsterelement 32 bildet an seiner, dem Grundkörper 28 abgewandten Vorderseite die Rückenlehnenauflagefläche 30 aus. Dabei weist das Polsterelement 32 einen nicht näher dargestellten oder bezeichneten Bezug auf, der das Polsterelement 32 an der Rückenlehnenauflagefläche 30 abschließt. Der Bezug ist dabei von dem Polsterelement 32 trennbar und kann zur Reinigung oder zum Austausch von dem Polsterelement 32 getrennt werden. Das zweite Polsterelement 114 ist auf einer Vorderseite des zweiten Grundkörpers 94 der Rückenlehneneinheit 26 angebracht. Das zweite Polsterelement 114 bildet die Rückenlehnenauflagefläche 30 in dem oberen Teilbereich 92 der Rückenlehneneinheit 26 aus. Zur Anbindung des zweiten Polsterelements 114 an den Grundkörper 94 weist die Rückenlehneneinheit 26 mehrere, nicht näher dargestellte Anbindungselemente auf, die korrespondierend in den Grundkörper 94 und das Polsterelement 114 integriert sind. Die Anbindungselemente sind dabei als Flausch- und Hakenbänder ausgebildet. Die Rückenlehnenauflagefläche 30 weist einen unteren Bereich auf, der von dem Polsterelement 32 gebildet ist. Der untere Bereich der Rückenlehnenauflagefläche 30 ist an einer der Sitzbodeneinheit 14 zugewandten Seite der Rückenlehneneinheit 26 angeordnet. Der untere Bereich der Rückenlehnenauflagefläche 30 ist in einem montierten Zustand dem Kabinenboden zugewandt. Die Rückenlehnenauflagefläche 30 weist einen oberen Bereich auf, der von dem Polsterelement 114 gebildet ist. Der obere Bereich der Rückenlehnenauflagefläche 30 ist an einer der Sitzbodeneinheit 14 abgewandten Seite der Rückenlehneneinheit 26 angeordnet. Der obere Bereich der Rückenlehnenauflagefläche 30 ist in einem montierten Zustand dem Kabinenboden abgewandt. Die Rückenlehnenauflagefläche 30 weist an dem unteren Ende eine Verjüngung auf. Die Rückenlehnenauflagefläche 30 ist in dem unteren Bereich schmäler als in dem oberen Bereich. Der untere Bereich der Rückenlehnenauflagefläche 30 weist eine Breite auf, die um mehr als 50 % kleiner ist als eine Breite der Rückenlehnenauflagefläche 30 in dem oberen Bereich. Ein Übergang zwischen dem oberen, breiten Bereich der Rückenlehnenauflagefläche 30 und dem unteren, schmalen Bereich der Rückenlehnenauflagefläche 30 wird von einem Radius gebildet. Die Verjüngung der Rückenlehnenauflagefläche 30 nimmt in dem unteren Bereich von einem Übergang von dem oberen Bereich bis zu einem unteren Ende der Rückenlehnenauflagefläche 30 zu. Der untere Bereich, der die Verjüngung der Rückenlehnenauflagefläche 30 ausbildet, ist an einem oberen, dem oberen Bereich zugewandten Ende breiter als an dem unteren, dem oberen Bereich abgewandten Ende. Grundsätzlich ist es auch denkbar, dass die Verjüngung über ihre gesamte Länge eine gleiche Breite aufweist.

Die Rückenlehneneinheit 26 bildet in einem Bereich der Lagereinheit 100 seitlich jeweils sich nach vorne erstreckende Anlageelemente 116, 118 aus. Die Anlageelemente 116, 118 sind dazu vorgesehen, dass sich ein auf dem Fluggastsitz 10 sitzender Passagier seitlich an den Anlageelementen 116, 118 anlehnen kann. Die Anlageelemente 116, 118 erstrecken sich dabei jeweils von einem unteren Bereich des oberen Teilbereichs 92 der Rückenlehneneinheit 26 bis in einen oberen Bereich des unteren Teilbereichs 90 der Rückenlehneneinheit 26. Die Anlageelemente 116, 118 erheben sich dabei von der Rückenlehnenauflagefläche 30 aus stetig in einem Radius, bis sie ihre maximale Erstreckung in etwa im Bereich der Lagereinheit 100 aufweisen und senken sich dann in einem Radius wieder stetig bis auf die Rückenlehnenauflagefläche 30 ab. Obere Teilbereiche der Anlageelemente 116, 118 werden dabei von dem Polsterelement 114, welches auf dem Grundkörper 94 des oberen Teilbereichs 92 der Rückenlehneneinheit 26 angeordnet ist, ausgebildet. Untere Teilbereiche der Anlageelemente 116, 118 werden dabei von dem Polsterelement 32, welches auf dem Grundkörper 28 des unteren Teilbereichs 90 der Rückenlehneneinheit 26 angeordnet ist, ausgebildet.

Die Rückenlehneneinheit 26 weist eine Kopfstütze 126 auf. Die Kopfstütze 126 ist an einem oberen Ende des oberen Teilbereichs 92 der Rückenlehneneinheit 26 angeordnet. Die Kopfstütze 126 umfasst ein Kopfstützelement 128. Das Kopfstützelement 128 ist als ein gepolstertes Element ausgebildet. Das Kopfstützelement 128 bildet an seinen beiden seitlichen Enden jeweils ein nach vorne ragendes Abstützelement 130, 132 aus, welches jeweils eine seitliche Abstützfläche für einen Kopf des Passagiers bereitstellt. Dadurch kann ein Passagier seinen Kopf komfortabel seitlich an der Kopfstütze 126 abstützen, wodurch die Kopfstütze 126 insbesondere gut für einen Seitenschlaf geeignet ist. Dabei ist denkbar, dass die Abstützelemente 130, 132 in einem Winkel zu dem Kopfstützelement 128 verstellbar sind. Die Kopfstütze 126 ist dabei in einer Höhe zu der Rückenlehneneinheit 26 verstellbar. Die Kopfstütze 126 umfasst dazu eine Linearführung 134. Das Kopfstützelement 128 kann über die Linearführung 134 in einer Höhe zu der Rückenlehneneinheit 26 verstellt werden. Dazu weist die Linearführung 134 eine mit der Rückenlehneneinheit 26 fest verbundene Führungsschiene 136 auf. Das Kopfstützelement 128 umfasst ein zu der Führungsschiene 136 korrespondierend ausgebildetes, nicht näher dargestelltes Führungselement, das in der Führungsschiene 136 geführt ist. Eine Bewegung des Führungselements zu der Führungsschiene 136 ist selbsthemmend ausgebildet. Zur Verschiebung des Kopfstützelements 128 auf der Führungsschiene 136 muss eine Kraft entlang einer Verschiebeachse der Führungsschiene 136 ausgeübt werden, die größer ist als eine Kraft, die in einem Betrieb durch einen auf dem Kopfstützelement 128 aufliegenden Kopf auf das Kopfstützelement 128 ausgeübt wird. Dadurch wird ein versehentliches Verstellen des Kopfstützelements 128 verhindert. Grundsätzlich ist es auch denkbar, dass die Kopfstütze 126 einen Verriegelungsmechanismus aufweist, der die Kopfstütze 126 in den verschiedenen Stellungen arretiert, wobei ein Passagier eine Entriegelung, beispielsweise durch einen Druckknopf, händisch vornehmen muss.

Die Sitzvorrichtung umfasst weiter eine erste Armlehneneinheit 34. Weiter umfasst die Sitzvorrichtung eine zweite Armlehneneinheit 36. Die beiden Armlehneneinheiten 34, 36 sind dazu vorgesehen, den Sitzbereich 16 seitlich zu begrenzen. Die Armlehneneinheiten 34, 36 begrenzen den Sitzbereich 16 an jeweils zwei gegenüberliegenden Seiten der Sitzbodeneinheit 14. Die Armlehneneinheiten 34, 36 begrenzen den Sitzbereich 16 in einer Richtung orthogonal zu einer Sitzrichtung des Fluggastsitzes 10. Die Armlehneneinheiten 34, 36 sind äquivalent zueinander ausgebildet. Die erste Armlehneneinheit 34 und die zweite Armlehneneinheit 36 sind spiegelbildlich ausgebildet. Im Folgenden wird deshalb lediglich die erste Armlehneneinheit 34 näher beschrieben, wobei die Beschreibung auf die zweite Armlehneneinheit 36 übertragen werden kann, welche spiegelbildlich identisch ausgebildet ist.

Die Armlehneneinheit 34 ist dazu vorgesehen, eine Auflagefläche 38 für einen auf dem Fluggastsitz 10 sitzenden Passagier bereitzustellen. Die Auflagefläche 38 ist dazu vorgesehen, dass ein Passagier wenigstens teilweise seinen Arm und/oder seine Hand darauf ablegen kann. Die Armlehneneinheit 34 umfasst ein Abstütz- und/oder Abtrennelement 40. Das Abstütz- und/oder Abtrennelement 40 ist dazu vorgesehen, eine Abstützfläche 42 für den Passagier bereitzustellen. Dabei bildet das Abstütz- und/oder Abtrennelement 40 eine seitliche Abstützfläche 42 aus. Die Abstützfläche 42 ist in Richtung des Sitzbereichs 16 ausgerichtet. Die Abstützfläche 42 ist im Wesentlichen orthogonal zu der von dem Sitzbereich 16 gebildeten Sitzfläche ausgerichtet. Die Abstützfläche 42 verläuft im Wesentlichen orthogonal zu dem Kabinenboden. Das Abstütz- und/oder Abtrennelement 40 erstreckt sich, beabstandet von der Sitzbodeneinheit 14, von der Rückenlehneneinheit 26 aus nach vorne. An einem hinteren, der Rückenlehneneinheit 26 zugewandten Ende ist das Abstütz- und/oder Abtrennelement 40 mit der Rückenlehneneinheit 26 verbunden. Dabei ist das Abstütz- und/oder Abtrennelement 40 starr mit der Rückenlehneneinheit 26 verbunden. Zur Verbindung des Abstütz- und/oder Abtrennelements 40 mit der Rückenlehneneinheit 26 weisen das Abstütz- und/oder Abtrennelement 40 und die Rückenlehneneinheit 26 jeweils nicht näher dargestellte, korrespondierend ausgebildete Anbindungsbereiche auf, über die das Abstütz- und/oder Abtrennelement 40 starr mit der Rückenlehneneinheit 26 verbunden ist. Das Abstütz- und/oder Abtrennelement 40 ist über eine nicht näher dargestellte Schraubenverbindung mit der Rückenlehneneinheit 26 verbunden. Grundsätzlich ist es auch denkbar, dass das Abstütz- und/oder Abtrennelement 40 über eine andere, dem Fachmann als sinnvoll erscheinende form-, kraft- und/oder stoffschlüssige Verbindung mit der Rückenlehneneinheit 26 fest verbunden ist. Grundsätzlich ist es auch denkbar, dass das Abstütz- und/oder Abtrennelement 40 über eine Kinematik schwenkbar mit der Rückenlehneneinheit 26 gekoppelt ist. Das Abstützund/oder Abtrennelement 40 weist eine Oberkante 44 auf, die eine der Sitzbodeneinheit 14 abgewandte Kontur des Abstütz- und/oder Abtrennelements 40 ausbildet. Die Oberkante 44 weist in unterschiedlichen Bereichen des Abstütz- und/oder Abtrennelements 40 unterschiedliche Höhen auf. Dadurch ist das Abstütz- und/oder Abtrennelement 40 in den unterschiedlichen Bereichen unterschiedlich hoch ausgebildet. Das Abstütz- und/oder Abtrennelement 40 weist einen hinteren Bereich auf, der der Rückenlehneneinheit 26 zugewandt ist. Das Abstütz- und/oder Abtrennelement 40 weist einen mittleren Bereich auf, der an eine der Rückenlehneneinheit 26 abgewandte Seite des hinteren Bereichs des Abstütz- und/oder Abtrennelements 40 anschließt. In dem hinteren Bereich weist das Abstütz- und/oder Abtrennelement 40 eine Höhe auf, die kleiner ist als eine Höhe in dem mittleren Bereich des Abstütz- und/oder Abtrennelements 40. Das Abstütz- und/oder Abtrennelement 40 ist in dem der Rückenlehneneinheit 26 zugewandten Bereich flacher ausgebildet, um einen Freiraum für einen Ellenbogen des auf dem Sitz sitzenden Passagiers zu schaffen. Dabei bildet die Oberkante 44 in dem hinteren Bereich eine Auflagefläche, insbesondere für den Ellenbogen eines Passagiers, aus. Das Abstütz- und/oder Abtrennelement 40 weist einen vorderen Bereich auf, der auf einer dem hinteren Bereich abgewandten Seite des mittleren Bereichs angeordnet ist. In dem vorderen Bereich weist das Abstütz- und/oder Abtrennelement 40 wieder eine geringere Höhe auf als in dem mittleren Bereich. Die Kontur ist von dem hinteren Bereich über den mittleren Bereich zu dem vorderen Bereich geschwungen ausgebildet. Die Höhe des Abstütz- und/oder Abtrennelements 40 steigt in einem Übergang von dem hinteren Bereich zu dem vorderen Bereich in einem Bogen an, wobei eine maximale Höhe des Abstütz- und/oder Abtrennelements 40 dabei kurz nach dem Übergang zum mittleren Bereich erreicht ist. Von der maximalen Höhe nimmt die Höhe des Abstütz- und/oder Abtrennelements 40 bis hin zu dem vorderen Ende des Abstütz- und/oder Abtrennelements 40 in einem Bogen stetig ab. Das Abstütz- und/oder Abtrennelement 40 bildet in etwa die Form einer halben Pfeilspitze aus.

Die Armlehneneinheit 34 weist zur Ausbildung der Auflagefläche 38 ein erstes Auflageelement 46 auf. Das Auflageelement 46 ist dazu vorgesehen, in zumindest einem Betriebszustand die im Wesentlichen parallel zur Sitzfläche ausgerichtete Auflagefläche 38 auszubilden. Das Auflageelement 46 weist eine Flügelform auf. Das Auflageelement 46 weist einen hinteren Bereich auf, der der Rückenlehneneinheit 26 zugewandt ist. Ein hinteres Ende des Auflageelements 46 ist in einem montierten Zustand beabstandet zu der Rückenlehneneinheit 26 angeordnet. Das erste Auflageelement 46 ist zwischen verschiedenen Stellungen verstellbar ausgebildet. Das erste Auflageelement 46 ist schwenkbar ausgebildet. Das erste Auflageelement 46 ist zu dem Abstütz- und/oder Abtrennelement 40 schwenkbar gelagert. Das erste Auflageelement 46 ist dabei zwischen einer Ruhestellung und einer Gebrauchsstellung verschwenkbar. In einer Ruhestellung ist das Auflageelement 46 an das Abstütz- und/oder Abtrennelement 40 angeklappt. In der Ruhestellung des Auflageelements 46 ist die Auflagefläche 38, die das Auflageelement 46 ausbildet, nicht von einem Passagier zur Auflage nutzbar. Ein Teil der Auflagefläche 38, der von dem Auflageelement 46 gebildet wird, ist in der Ruhestellung der Abstützfläche 42 des Abstütz- und/oder Abtrennelements 40 zugewandt. In der Gebrauchsstellung ist das Auflageelement 46 von dem Abstütz- und/oder Abtrennelement 40 weggeklappt. Ein Winkel zwischen der Abstützfläche 42 des Abstütz- und/oder Abtrennelements 40 und der Auflagefläche 38 des ersten Auflageelements 46 beträgt in der Gebrauchsstellung in etwa 90 Grad. In der Gebrauchsstellung bilden das Abstütz- und/oder Abtrennelement 40 und das Auflageelement 46 im Wesentlichen eine L-Form aus.

In der Ruhestellung bildet das Auflageelement 46 eine Abstützfläche 58 aus. Die Abstützfläche 58 des Auflageelements 46 ist von einer der Auflagefläche 38 gegenüberliegenden Unterseite des Auflageelements 46 ausgebildet. In der Gebrauchsstellung ist die Abstützfläche 58 nach unten ausgerichtet und der Sitzbodeneinheit 14 zugewandt. In der Ruhestellung, in der das Auflageelement 46 an das Abstütz- und/oder Abtrennelement 40 angeklappt ist, ist die Abstützfläche 58 nach innen gerichtet und dem Sitzbereich 16 zugewandt. An der Abstützfläche 58 kann sich ein Passagier anlehnen. Insbesondere in einer Schlafposition, in der die Armlehneneinheit 34 nicht zum Ablegen des Arms genutzt wird, kann sich der Passagier vorteilhaft komfortabel in dem Fluggastsitz 10 positionieren und sich seitlich an der Abstützfläche 58 des Auflageelements 46 abstützen.

Die Armlehneneinheit 36 weist ein weiteres Auflageelement 48 auf. Das weitere Auflageelement 48 ist dazu vorgesehen, die Auflagefläche 38 für den Passagier zumindest teilweise auszubilden. Das weitere Auflageelement 48 ist dabei zwischen dem Abstützund/oder Abtrennelement 40 und dem ersten Auflageelement 46 angeordnet. Das weitere Auflageelement 48 ist starr mit dem Abstütz- und/oder Abtrennelement 40 verbunden. Dabei ist das weitere Auflageelement 48 einstückig mit dem Abstütz- und/oder Abtrennelement 40 ausgebildet. Grundsätzlich ist es auch denkbar, dass das weitere Auflageelement 48 form-, kraft- und/oder stoffschlüssig mit dem Abstütz- und/oder Abtrennelement 40 verbunden ist. Dabei ist es beispielsweise denkbar, dass das Auflageelement 48 über eine Schraubenverbindung oder eine Klebeverbindung mit dem Abstütz- und/oder Abtrennelement 40 verbunden ist. Ein Übergang zwischen der von dem Abstütz- und/oder Abtrennelement 40 ausgebildeten Abstützfläche 42 und der von dem weiteren Auflageelement 48 ausgebildeten Auflagefläche 38 ist von einem Radius gebildet.

Zur schwenkbaren Lagerung des ersten Auflageelements 46 zu dem Abstütz- und/oder Abtrennelement 40 weist die Armlehneneinheit 34 ein Scharnier 50 auf. Das Scharnier 50 ist zwischen dem ersten Auflageelement 46 und dem weiteren Auflageelement 48 angeordnet. Das Scharnier 50 ist teilweise von dem ersten Auflageelement 46 und teilweise von dem weiteren Auflageelement 48 gebildet. Zur Ausbildung des Scharniers 50 weist das erste Auflageelement 46 mehrere, beabstandet zueinander angeordnete Durchgangslöcher auf, die durch Ausnehmungen voneinander getrennt sind. Zur Ausbildung des Scharniers 50 bildet das weitere Auflageelement 48 ebenfalls Durchgangslöcher auf, die in angeformten Stegen eingebracht sind, welche korrespondierend zu den Ausnehmungen ausgebildet sind, die das erste Auflageelement 48 zwischen seinen Durchgangslöchern aufweist. In einem montierten Zustand sind die an das weitere Auflageelement 48 angeformten Stege in den Ausnehmungen des ersten Auflageelements 46 angeordnet, wodurch die Durchgangslöcher des ersten Auflageelements 46 und des weiteren Auflageelements 48 in einer Flucht liegen. Das Scharnier 50 weist ein Stiftelement auf, welches zur schwenkbaren Verbindung des ersten Auflageelements 46 und des weiteren Auflageelements 48 durch die Durchgangslöcher beider Auflageelemente 46, 48 des Scharniers 50 geführt ist. Über das Stiftelement sind die beiden Auflageelemente 46, 48 zueinander schwenkbar. Das Stiftelement bildet eine Schwenkachse 52 aus, um die das erste Auflageelement 46 zu dem Abstütz- oder Abtrennelement 40 verschwenkbar ist. Die Schwenkachse 52 verläuft einer Haupterstreckung der Armlehneneinheit 34. Dabei verläuft die Schwenkachse 5a im Wesentlichen parallel zur Sitzrichtung 80. parallel zu der Sitzrichtung 80. Dabei weist das Scharnier 50 ein Stoppelement 138 auf, das das erste Auflageelement 46 in der Gebrauchsstellung sowie in der Ruhestellung hält. Das Stoppelement 138 ist als ein Anschlagselement ausgebildet, das starr mit dem Auflageelement 46 verbunden ist. Das Stoppelement 138 schlägt in der Gebrauchsstellung an einen nicht näher dargestellten Anschlag unterhalb des Auflageelements 48 an, sodass das Auflageelement 46 in der Gebrauchsstellung fixiert ist. Grundsätzlich ist es auch denkbar, dass das Scharnier 50 ein oder mehrere Rastelemente aufweist, die das erste Auflageelement 46 in der Gebrauchsstellung sowie in der Ruhestellung fixieren. Durch die Lagerung über das Scharnier 50 ist das erste Auflageelement 46 an einem unteren Ende der Armlehneneinheit 34 angelenkt.

Die Sitzvorrichtung umfasst ein erstes Abstützelement 54. Das Abstützelement 54 überspannt einen Bereich zwischen der Sitzbodeneinheit 14 und der Armlehneneinheit 34. Die Sitzvorrichtung umfasst ein zweites Abstützelement 56, das einen Bereich zwischen der Sitzbodeneinheit 14 und der Armlehneneinheit 36 ausbildet. Das Abstützelement 56 ist dabei spiegelbildlich zu dem Abstützelement 54 ausgebildet. Da die Abstützelemente 54, 56 im Wesentlichen identische Spiegelbilder voneinander darstellen, wird im Folgenden lediglich das erste Abstützelement 54 näher beschrieben. Die folgende Beschreibung des ersten Abstützelements 54 kann ebenfalls zur Erläuterung des zweiten Abstützelements 56 herangezogen werden.

Das Abstützelement 54, das den Bereich zwischen der Sitzbodeneinheit 14 und der Armlehneneinheit 34 überspannt, ist dazu vorgesehen, dass sich der auf dem Fluggastsitz 10 sitzende Passagier mit seinem unteren Rückenbereich daran abstützen kann. Das Abstützelement 54 ist für eine seitliche Abstützung des Passagiers vorgesehen. Das Abstützelement 54 ist in dem Bereich zwischen der Sitzbodeneinheit 14, der Armlehneneinheit 34 und der Rückenlehneneinheit 26 angeordnet. Das Abstützelement 54 ist als ein Bespannungselement ausgebildet. Das als Bespannungselement ausgebildete Abstützelement 54 ist zwischen der Armlehneneinheit 34, der Sitzbodeneinheit 14 und der Rückenlehneneinheit 26 gespannt. Dabei ist das als Bespannungselement ausgebildete Abstützelement 54 von einem Netz gebildet. Grundsätzlich ist es auch denkbar, dass das als Bespannungselement ausgebildete Abstützelement 54 von Stoff oder einem anderen elastischen Material ausgebildet ist, wie beispielsweise Leder oder aus einem dünnen Kunststoffelement. Das Abstützelement 54 ist mit einem oberen Ende an der Armlehneneinheit 34 angebunden. Das Abstützelement 54 erstreckt sich über eine gesamte Länge der Armlehneneinheit 34. Das Abstützelement 54 ist an einer unteren Seite des Auflageelements 48 angebracht. Grundsätzlich ist es auch denkbar, dass das Abstützelement 54 an einem anderen Bauteil der Armlehneneinheit 34 angebracht ist. Zur Anbindung des Abstützelements 54 an das Auflageelement 48 weist das Abstützelement 54 einen nicht näher gezeigten Anbindungsbereich auf. Der Anbindungsbereich ist an dem oberen Ende des Abstützelements 54 angeordnet. Der Anbindungsbereich weist dabei wenigstens ein Anbindungselement auf, über das das Abstützelement 54 mit der Armlehneneinheit 34 verbindbar ist. Dabei ist das Anbindungselement als ein Formund/oder Kraftschlusselement ausgebildet, wie beispielsweise als ein Flausch- und Hakenband oder als ein Teil eines Reißverschlusses. Grundsätzlich ist es auch denkbar, dass das Abstützelement 54 in dem Anbindungsbereich über eine Klemmverbindung mit der Armlehneneinheit 34 verbunden ist. Alternativ wäre es auch denkbar, dass das Abstützelement 54 in seinem Anbindungsbereich über eine Stoffschlussverbindung, wie insbesondere eine Klebeverbindung, mit der Armlehneneinheit 34, insbesondere mit dem Auflageelement 48, verbunden ist.

An einem hinteren Ende ist das Abstützelement 54 an die Rückenlehneneinheit 26 angebunden. Zur Anbindung an die Rückenlehneneinheit 26 weist das Abstützelement 54 an seinem hinteren Ende einen nicht näher dargestellten Anbindungsbereich auf. Mit dem nicht näher dargestellten Anbindungsbereich ist das Abstützelement 54 mit dem ersten Grundkörper 28 der Rückenlehneneinheit 26 verbunden. Der Anbindungsbereich weist dabei wenigstens ein Anbindungselement auf, über das das Abstützelement 54 mit dem ersten Grundkörper 28 der Rückenlehneneinheit 26 verbindbar ist. Dabei ist das Anbindungselement als ein Form- und/oder Kraftschlusselement ausgebildet, wie beispielsweise als ein Flausch- und Hakenband oder als ein Teil eines Reißverschlusses. Grundsätzlich ist es auch denkbar, dass das Abstützelement 54 in dem Anbindungsbereich über eine Klemmverbindung mit dem Grundkörper 28 der Rückenlehneneinheit 26 verbunden ist. Alternativ wäre es auch denkbar, dass das Abstützelement 54 über eine Kederverbindung mit der Rückenlehneneinheit 26 verbunden ist. Alternativ wäre auch denkbar, dass das Abstützelement 54 in seinem Anbindungsbereich über eine Stoffschlussverbindung, wie insbesondere einer Klebeverbindung, mit dem Grundkörper 28 der Rückenlehneneinheit 26 verbunden ist. In einem montierten Zustand schließt das Abstützelement 54 direkt an die Verjüngung in der Rückenlehnenauflagefläche 30 an. Das Abstützelement 54 erstreckt sich an einem hinteren Ende von einem oberen Punkt, an dem das Abstützelement 54 mit der Armlehneneinheit 34 verbunden ist, in Richtung der Sitzbodeneinheit 14 nach innen. Das Abstützelement 54 geht an seiner der Rückenlehneneinheit 26 zugewandten Seite in die Rückenlehnenauflagefläche 30 über.

An seinem unteren Ende ist das Abstützelement 54 mit der Sitzbodeneinheit 14 verbunden. Das Abstützelement 54 ist mit dem Grundkörper 18 der Sitzbodeneinheit 14 verbunden. Zur Anbindung des Abstützelements 54 an die Sitzbodeneinheit 14 umfasst das Abstützelement 54 einen Anbindungsbereich. Über den Anbindungsbereich ist das Abstützelement 54 fest mit dem Grundkörper 18 verbunden. Grundsätzlich ist es auch denkbar, dass das Abstützelement 54 über den Anbindungsbereich nicht fest mit dem Grundkörper 18 der Sitzbodeneinheit 14 verbunden ist, sondern lediglich zwischen dem Grundkörper 18 und dem Polsterelement 20 eingeklemmt ist. Alternativ wäre es auch denkbar, dass das Abstützelement 54 über eine Kederverbindung mit dem Grundkörper 18 der Sitzbodeneinheit 14 verbunden ist. In einem montierten Zustand schließt das Abstützelement 54 direkt an die Verjüngung der Sitzbodeneinheit 14 an. Dadurch erstreckt sich das Abstützelement 54 von einem vorderen Ende, welches in etwa an dem vorderen, der Rückenlehneneinheit 26 abgewandten Ende der Armlehneneinheit 34 angeordnet ist, von außen in Richtung der Rückenlehneneinheit 26 nach innen. An einem Punkt, an dem sich die Verjüngung der Rückenlehnenauflagefläche 30 und die Verjüngung der Sitzbodeneinheit 14 treffen, erstreckt sich das Abstützelement 54 am weitesten nach innen. Von dem Punkt, an dem sich die Verjüngung der Rückenlehnenauflagefläche 30 und die Verjüngung der Sitzbodeneinheit 14 treffen, erstreckt sich das Abstützelement 54, in Sitzrichtung gesehen, nach außen. Von dem Punkt, an dem sich die Verjüngung der Rückenlehnenauflagefläche 30 und die Verjüngung der Sitzbodeneinheit 14 treffen, erstreckt sich das Abstützelement 54 in Richtung der Rückenlehneneinheit 26, also nach oben gesehen, ebenfalls nach außen.

Das Abstützelement 54 ist als ein Bespannungselement ausgebildet. Das als Bespannungselement ausgebildete Abstützelement 54 ist in dem Bereich zwischen der Armlehneneinheit 34, der Sitzbodeneinheit 14 und der Rückenlehneneinheit 26 aufgespannt. Das als Bespannungselement ausgebildete Abstützelement 54 ist dabei von einem flexiblen Material ausgebildet. Insbesondere ist das als Bespannungselement ausgebildete Abstützelement 54 von einem Textil gebildet. Das Abstützelement 54 ist von einem Netz gebildet. Grundsätzlich ist es auch denkbar, dass das Abstützelement 54 aus einem Stoff oder einem anderen flexiblen Material gebildet ist. Dabei ist es denkbar, dass das Abstützelement 54 beispielsweise von einer Kunststoffplatte ausgebildet ist. Durch die Ausbildung des Abstützelements 54 als ein Bespannungselement kann sich das Abstützelement 54 vorteilhaft an eine Kontur des auf dem Fluggastsitz 10 sitzenden Passagiers anpassen.

Die Armlehneneinheit 34 weist ein Versteifungselement 124 auf. Das Versteifungselement 124 ist an einem vorderen Ende des Abstützelements 54 angebracht. Das Versteifungselement 124 ist dazu vorgesehen, das Abstützelement 54 in seinem vorderen Bereich in Form zu halten. Das Versteifungselement 124 ist dabei als ein Steg ausgebildet, an dem das Abstützelement 54 angebunden ist. Das Versteifungselement 124 verbindet dabei die Armlehneneinheit 34 mit der Sitzbodeneinheit 14. Das Versteifungselement 124 ist dabei an dem vorderen Ende der Armlehneneinheit 34 angeordnet und erstreckt sich von einer Unterseite der Armlehneneinheit 34 nach unten in Richtung der Sitzbodeneinheit 14. An seinem unteren Ende ist das Versteifungselement 124 fest mit der Sitzbodeneinheit 14, insbesondere mit dem Grundkörper 18 der Sitzbodeneinheit 14, verbunden. Grundsätzlich ist es auch denkbar, dass das Versteifungselement 124 lediglich als eine Verstärkung ausgebildet ist, die in das von einem Textil gebildete Abstützelement 54 eingebracht ist. Dabei wäre es beispielsweise denkbar, dass ein Steg in das Abstützelement 54 eingenäht ist.

Das Abstützelement 54 ist in seiner Länge und/oder in seiner Breite einstellbar. Dadurch kann eine Härte bzw. eine Nachgiebigkeit des Abstützelements 54 eingestellt werden. Dadurch kann ein Passagier je nach seinen Proportionen das Abstützelement 54 so einstellen, dass ein maximaler Komfort für ihn entsteht. Zur Einstellung der Länge und/oder Breite umfasst die Sitzvorrichtung eine nicht näher dargestellte Einstelleinheit. Die Einstelleinheit weist einen Arretiermechanismus auf, der das als Bespannungselement ausgebildete Abstützelement 54 auf verschiedenen Längen arretieren kann. Durch den Arretiermechanismus kann eine Größe des zwischen der Sitzbodeneinheit 14, der Armlehneneinheit 34 und der Rückenlehneneinheit 26 gespannten Abstützelements 54 eingestellt werden. Dazu weist der Arretiermechanismus ein Klemmelement auf, das das Abstützelement 54 auf einer Seite einklemmt. Je nachdem, wie hart oder weich das Abstützelement 54 eingestellt ist, ist ein mehr oder weniger großer Teil des Abstützelements 54 in dem Bereich zwischen der Sitzbodeneinheit 14, der Armlehneneinheit 34 und der Rückenlehneneinheit 26 freigegeben. Ist das Abstützelement 54 hart eingestellt, ist ein überschüssiger Teil des Abstützelements 54 hinter dem Arretiermechanismus angeordnet und nicht von dem Passagier nutzbar. Dadurch ist das Abstützelement 54 stärker gespannt und kann nicht so weit von einem Passagier ausgelenkt werden. Wird das Abstützelement 54 weicher eingestellt, wird der vormals hinter dem Klemmelement eingeklemmte überschüssige Teil freigegeben und befindet sich nun auch in dem Bereich zwischen der Sitzbodeneinheit 14, der Armlehneneinheit 34 und der Rückenlehneneinheit 26. Dadurch ist das Abstützelement 54 weniger gespannt und kann so von einem Passagier weiter ausgelenkt werden.

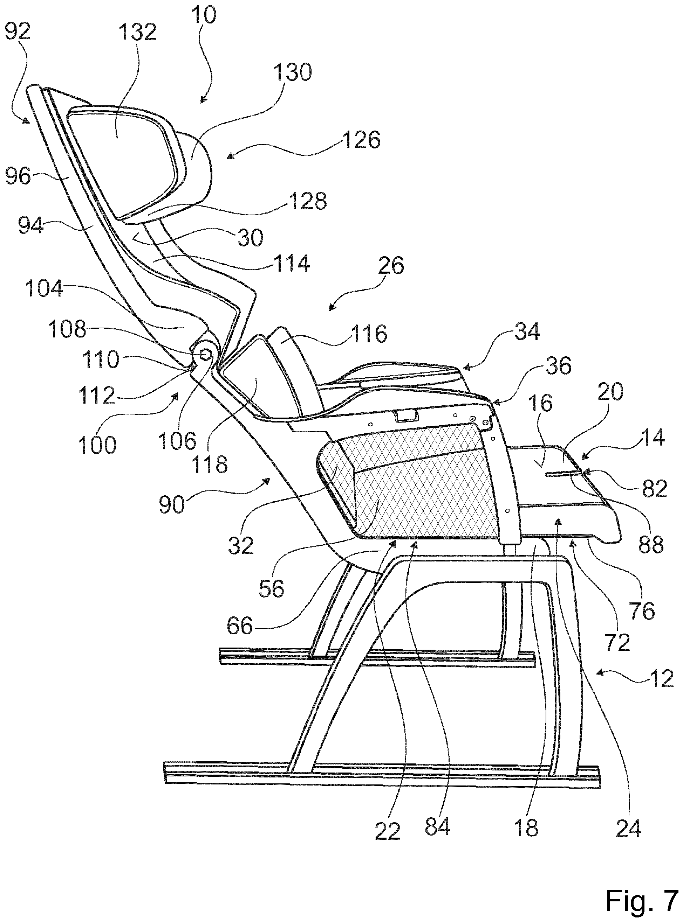

Der Fluggastsitz 10 mit der Sitzvorrichtung kann in verschiedenen Sitzpositionen positioniert werden. Die mit der Sitzbodeneinheit 14 verbundene Rückenlehneneinheit 26 ist in den verschiedenen Sitzpositionen unterschiedlich positioniert. Eine erste Sitzposition, in der die Rückenlehneneinheit 26 bzw. der Fluggastsitz 10 positionierbar ist, ist als die Komfortposition ausgebildet. Die Komfortposition ist dabei in der Figur 7 dargestellt. Die Komfortposition ist als eine für den Passagier optimierte Grundposition ausgebildet. Die Grundposition ist als eine Stellung ausgebildet, für die alle Parameter des Sitzes optimal ausgelegt sind, um in der Komfortposition einen bestmöglichen Komfort für einen Passagier zu erreichen. In der Komfortposition bildet die Rückenlehneneinheit 26 eine im Wesentlichen eben ausgebildete Rückenlehnenauflagefläche 30 aus. In der Komfortposition, die als Grundposition ausgebildet ist, weist die Rückenlehnenauflagefläche 30 eine Neigung von im Wesentlichen 135 Grad zu der Aufständerebene auf. In der Komfortposition sind der untere starre Teilbereich 90 der Rückenlehneneinheit 26 und der obere schwenkbare Teilbereich 92 im Wesentlichen in einer Ebene zueinander ausgerichtet und nicht zueinander verschwenkt (siehe Figur 7). Die Polsterelemente 32, 114 bilden eine im Wesentliche ebene Rückenlehnenauflagefläche 30 aus. In einem Übergang zwischen dem Polsterelement 32 und dem Polsterelement 114 besteht in der Komfortposition im Wesentlichen kein Versatz. Die Rückenlehneneinheit 26, deren Teilbereiche 90, 92 im Wesentlichen in einer Ebene zueinander ausgerichtet sind, und die Sitzbodeneinheit 14 schließen in der Komfortposition, die als die Grundposition des Fluggastsitzes 10 ausgebildet ist, einen Sitzwinkel von 130 Grad ein.

Eine weitere Sitzposition ist als die TTL-Position ausgebildet. In der TTL-Position ist der obere, schwenkbare Teilbereich 92 aufgestellt und im Wesentlichen senkrecht zu der Aufständerebene ausgerichtet. Dabei ist zur Verstellung der Rückenlehneneinheit 26 lediglich der obere schwenkbare Teilbereich 92 zu dem unteren starren Teilbereich 90 verschwenkt. Die TTL-Position stellt dabei eine maximale Verstellung des oberen Teilbereichs 92 zu dem unteren Teilbereich 90 der Rückenlehneneinheit 26 dar. In der TTL-Position ist der obere Teilbereich 92 um im Wesentlichen 30 Grad zu dem unteren Teilbereich 90 verschwenkt. Der obere Teilbereich 92 kann dabei zwischen der Komfortposition und der TTL-Position stufenlos zu dem unteren Teilbereich 90 verstellt und arretiert werden. Zur Arretierung des oberen Teilbereichs 92 zu dem unteren Teilbereich 90 umfasst die Sitzvorrichtung eine nicht näher dargestellte Verriegeleinheit. Die Verriegeleinheit arretiert den oberen Teilbereich 92 in den verschiedenen Stellungen zu dem unteren Teilbereich 90. Dabei ist es denkbar, dass die Verriegeleinheit beispielsweise eine Druckfeder aufweist, die die beiden Teilbereiche 90, 92 zueinander fixiert und über ein Betätigungselement von dem Bediener zur Verstellung der beiden Teilbereiche 90, 92 entriegelt werden kann. Dabei ist eine aus dem Stand der Technik bekannte Verriegeleinheit denkbar, die zur Verstellung einer Rückenlehneneinheit 26 zur Sitzbodeneinheit 14 vorgesehen ist.

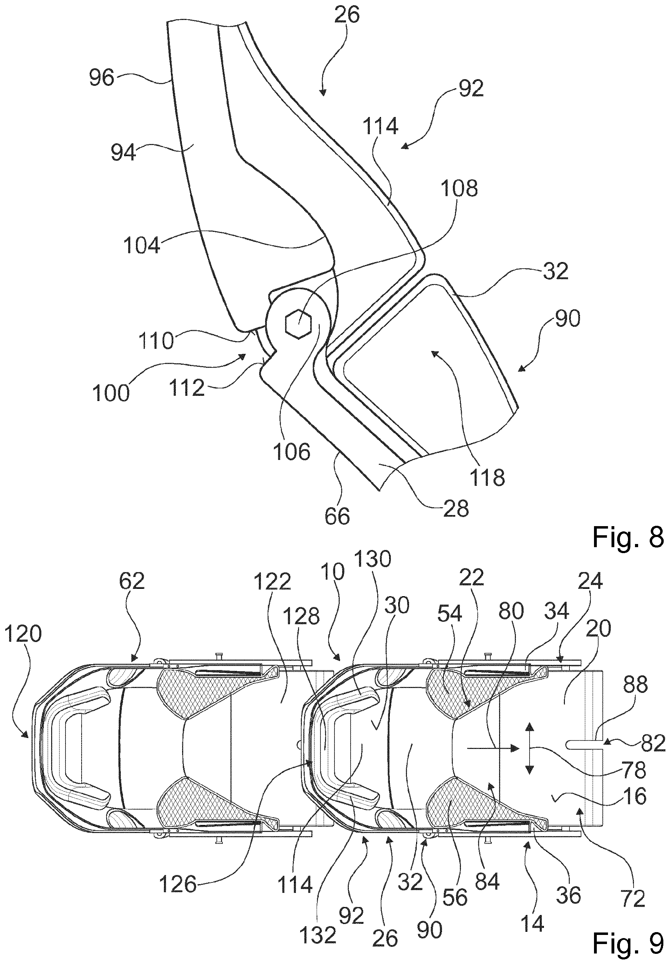

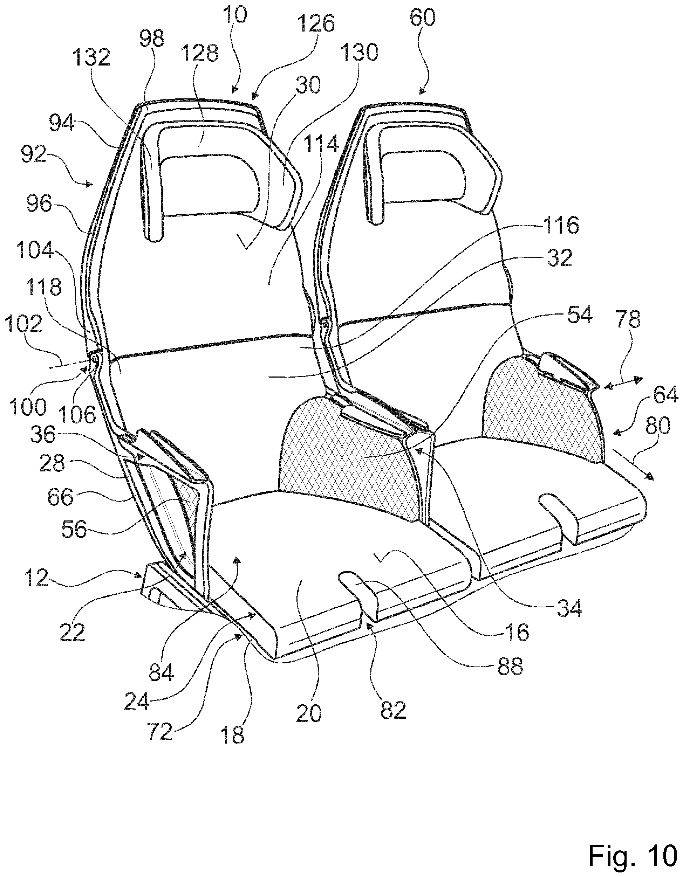

Die Figuren 9 und 10 zeigen jeweils einen Teil eines Layouts mit mehreren Fluggastsitzen 10, 60, 62 mit der erfindungsgemäßen Sitzvorrichtung. In dem beispielhaft gezeigten Layout sind die Fluggastsitze 10, 60, 62 in der Flugzeugkabine aufgeständert. Grundsätzlich sind natürlich auch andere, dem Fachmann als sinnvoll erscheinende Layouts denkbar, in denen die Fluggastsitze 10, 60, 62 in einer anderen Art und Weise angeordnet sind. Wie in Figur 9 zu erkennen, sind die Fluggastsitze 10, 62 in einer Sitzlängsreihe 120 hintereinander angeordnet. Die in der Sitzlängsreihe 120 hintereinander angeordneten Fluggastsitze 10, 62 weisen dabei einen Pitchabstand von 33 Zoll auf. In einer Sitzlängsreihe 120 sind dabei vorzugsweise mehr als 10 Fluggastsitze 10, 62 hintereinander in der Flugzeugkabine angeordnet. In der Komfortposition des Fluggastsitzes 10 erstreckt sich die Rückenlehneneinheit 26 des vorderen Fluggastsitzes 10 bis über eine Sitzbodeneinheit 122 des hinteren Fluggastsitzes 62. In der Vertikalrichtung überschneiden sich der vordere Fluggastsitz 10 und der hintere Fluggastsitz 62 zumindest teilweise. Dabei ist insbesondere ein oberer Teilbereich 92 der Rückenlehneneinheit 26, in einer Vertikalrichtung gesehen, oberhalb der Sitzbodeneinheit 122 des hinteren Fluggastsitzes 62 angeordnet. Eine Überschneidung der Rückenlehneneinheit 26 des vorderen Fluggastsitzes 10 in der Komfortposition mit der Sitzbodeneinheit 122 des hinteren Fluggastsitzes 62 beträgt dabei 3,5 Zoll. Grundsätzlich ist es auch denkbar, dass eine Überschneidung größer oder kleiner ausgebildet ist. Grundsätzlich ist es aber auch denkbar, dass die beiden hintereinander angeordneten Fluggastsitze 10, 62 keine Überschneidung aufweisen. In einer TTL-Position der Rückenlehneneinheit 26 des vorderen Fluggastsitzes 10 überschneidet sich die Rückenlehneneinheit 26 nicht mit dem hinteren Fluggastsitz 62. Dadurch kann in einer TTL-Position des vorderen Fluggastsitzes 10 ein Passagier vorteilhaft einfach in seinen Fluggastsitz 62 gelangen. Dabei sind alle in einer Sitzlängsreihe 120 angeordneten Fluggastsitze 10, 62 jeweils in einem gleichen Abstand zueinander angeordnet.

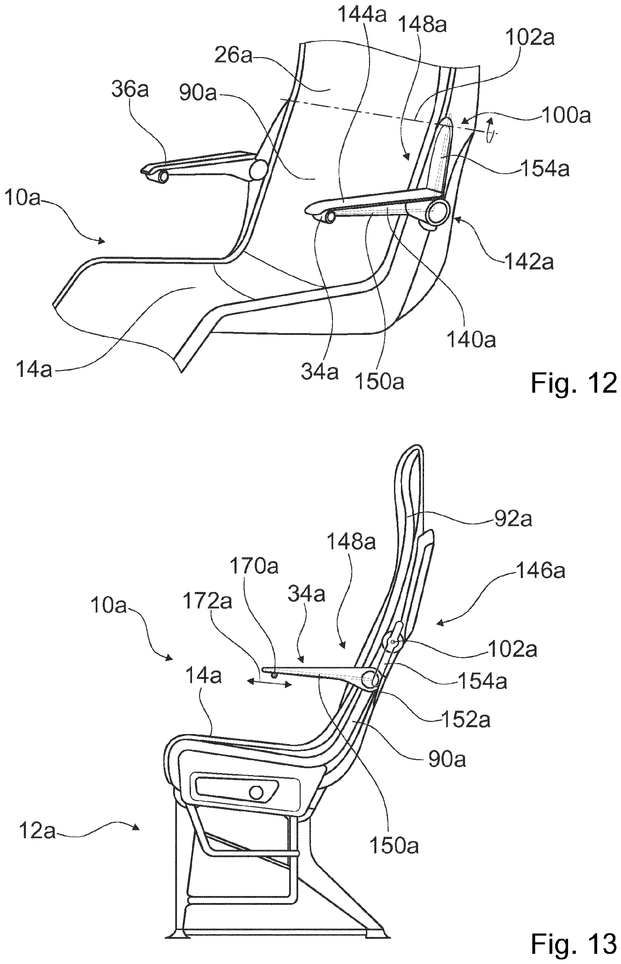

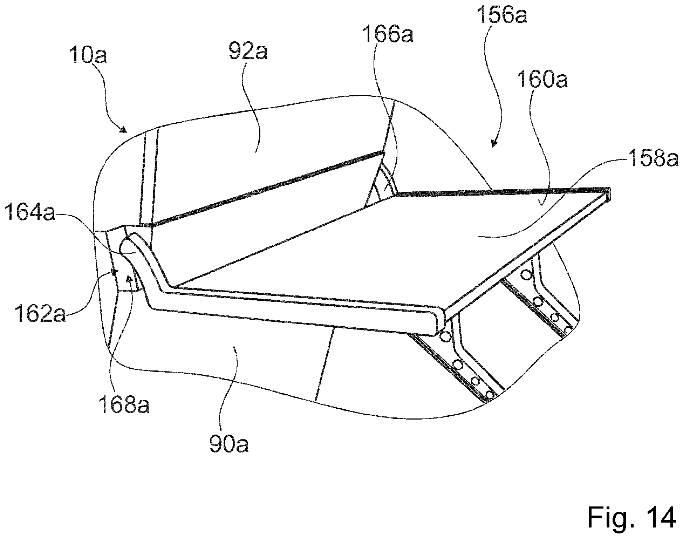

In den Figuren 12 bis 14 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 11, verwiesen werden kann. Zur Unterscheidung der Ausführungsbeispiele ist den Bezugszeichen des zweiten Ausführungsbeispiels in den Figuren 12 bis 14 der Buchstabe a nachgestellt.

Die Figuren 12 und 13 zeigen eine erfindungsgemäße Sitzvorrichtung in einem zweiten Ausführungsbeispiel. Die Sitzvorrichtung ist als eine Fluggastsitzvorrichtung ausgebildet. Die Sitzvorrichtung ist als Teil eines Sitzes, insbesondere als Teil eines Fluggastsitzes 10a, ausgebildet. Die Sitzvorrichtung weist eine Aufständereinheit 12a auf. Die Aufständereinheit 12a ist dazu vorgesehen, den Fluggastsitz 10a auf einem Kabinenboden aufzuständern. Die Sitzvorrichtung umfasst eine Sitzbodeneinheit 14a. Die Sitzbodeneinheit 14a ist dazu vorgesehen, einen Sitzbereich 16a bereitzustellen, auf dem ein Passagier, insbesondere während eines Flugs, sitzen kann. Der Sitzbereich 16a bildet eine Sitzfläche aus, auf der der Passagier sitzt. Die Sitzbodeneinheit 14a ist mit der Aufständereinheit 12a verbunden. Die Sitzbodeneinheit 14a ist starr mit der Aufständereinheit 12a verbunden. Die Sitzbodeneinheit 14a umfasst einen Grundkörper 18a. Der Grundkörper 18a der Sitzbodeneinheit 14a ist mit der Aufständereinheit 12a verbunden. Der Grundkörper 18a ist zumindest teilweise aus einem Faserverbundwerkstoff gebildet. Grundsätzlich ist es auch denkbar, dass der Grundkörper 18a aus einem Metall, wie insbesondere einem Magnesium, gebildet ist. Dabei ist der Grundkörper 18a besonders bevorzugt aus einem Magnesiumdruckguss gebildet.

Die Sitzvorrichtung umfasst eine Rückenlehneneinheit 26a. Die Rückenlehneneinheit 26a ist dazu vorgesehen, dass sich ein auf dem Fluggastsitz 10a sitzender Passagier mit seinem Rücken anlehnen kann. Die Rückenlehneneinheit 26a ist an dem hinteren Ende der Sitzbodeneinheit 14a angebracht. Die Rückenlehneneinheit 26a begrenzt den Sitzbereich 16a nach hinten. Die Rückenlehneneinheit 26a ist starr mit der Sitzbodeneinheit 14a verbunden. Die Rückenlehneneinheit 26a umfasst einen starren Teilbereich 90a. Der starre Teilbereich 90a ist als ein unterer Bereich der Rückenlehneneinheit 26a ausgebildet. Der untere starre Teilbereich 90a ist der Sitzbodeneinheit 14a zugewandt. Der untere Teilbereich 90a der Rückenlehneneinheit 26a bildet einen ersten Grundkörper 28a der Rückenlehneneinheit 26a aus. Der Grundkörper 28a der Rückenlehneneinheit 26a bildet dabei teilweise eine tragende Struktur der Rückenlehneneinheit 26a aus. Der erste Grundkörper 28a der Rückenlehneneinheit 26a ist einstückig mit dem Grundkörper 18a der Sitzbodeneinheit 14a ausgebildet. Dabei ist der Grundkörper 28a des unteren starren Teilbereichs 90a von einer dünnwandigen Rückwand 66a, einer dünnwandigen Frontwand 68a und einem zwischen der dünnwandigen Rückwand 66a und der dünnwandigen Frontwand 68a angeordneten Versteifungselement 70a ausgebildet. Der Grundkörper 28a des unteren Teilbereichs 90a kann dabei grundsätzlich auch als ein Rahmen mit einer Bespannung ausgebildet sein. Dabei ist es denkbar, dass der Rahmen, der einen Teil des Grundkörpers 28a bildet, aus einem Metall oder einem Faserverbundwerkstoff gebildet ist. Eine Bespannung aus einem Textil ist dabei unter Spannung mit dem Rahmen verbunden und bildet dabei eine Abstützfläche für den Passagier aus.

Die Rückenlehneneinheit 26a weist einen oberen Teilbereich 92a auf. Der obere Teilbereich 92a ist schwenkbar zu dem unteren Teilbereich 90a ausgebildet. Die Rückenlehneneinheit 26a weist einen zweiten Grundkörper 94a auf, der den oberen Teilbereich 92a ausbildet. Der Grundkörper 94a ist dabei im Wesentlichen aus einem Faserverbundwerkstoff gebildet. Der Grundkörper 94a des oberen Teilbereichs 92a kann dabei grundsätzlich auch als ein Rahmen mit einer Bespannung ausgebildet sein. Dabei ist es denkbar, dass der Rahmen, der einen Teil des Grundkörpers 94a bildet, aus einem Metall oder einem Faserverbundwerkstoff gebildet ist. Eine Bespannung aus einem Textil ist dabei unter Spannung mit dem Rahmen verbunden und bildet dabei eine Abstützfläche für den Passagier aus. Die Rückenlehneneinheit 26a umfasst eine Lagereinheit 100a. Über die Lagereinheit 100a sind der untere Teilbereich 90a und der obere Teilbereich 92a zueinander schwenkbar. Die Lagereinheit 100a verbindet den ersten Grundkörper 28a der Rückenlehneneinheit 26a, der den unteren Teilbereich 90a ausbildet, schwenkbar mit dem zweiten Grundkörper 94a der Rückenlehneneinheit 26a. Die Lagereinheit 100a weist eine Schwenkachse 102a auf, um die der obere Teilbereich 92a zu dem unteren Teilbereich 90a schwenkbar ist. Die Lagereinheit 100a umfasst weiter ein nicht näher dargestelltes Federelement. Das Federelement ist dazu vorgesehen, eine Kraft auf den oberen Teilbereich 92a auszuüben, sodass dieser in Richtung der TTL-Position des Fluggastsitzes 10a gedrückt wird. Dadurch erfährt ein Passagier bei einem Verstellen in die TTL-Position einen Widerstand und kann so komfortabel die TTL-Position erreichen. Bei einer Verstellung aus der TTL-Position stellt das Federelement eine unterstützende Kraft bereit.

Die Sitzvorrichtung umfasst weiter eine erste Armlehneneinheit 34a. Weiter umfasst die Sitzvorrichtung eine zweite Armlehneneinheit 36a. Die beiden Armlehneneinheiten 34a, 36a sind dazu vorgesehen, den Sitzbereich 16a seitlich zu begrenzen. Die Armlehneneinheiten 34a, 36a begrenzen den Sitzbereich 16a an jeweils zwei gegenüberliegenden Seiten der Sitzbodeneinheit 14a. Die Armlehneneinheiten 34a, 36a weisen beide jeweils einen Grundkörper 140a auf. Der Grundkörper 140a der Armlehneneinheiten 34a, 36a weist jeweils eine Lagereinheit 142a auf. Mittels der Lagereinheit 142a sind die Grundkörper 142a der Armlehneneinheiten 34a, 36a mit dem unteren Teilbereich 90a der Rückenlehneneinheit 26a angeordnet. Über die Lagereinheit 142a sind die Armlehneneinheiten 34a, 36a zu der Rückenlehneneinheit 26a verschwenkbar. Dabei sind die Armlehneneinheiten 34a, 36a zwischen einer Gebrauchsstellung, in der sie die im Wesentlichen parallel zu dem Sitzbodeneinheit 14a ausgerichtet sind, und einer Verstaustellung, in der sie im Wesentlichen parallel zu dem unteren Teilbereich 90a der Rückenlehneneinheit 26a ausgerichtet sind, verstellbar. Die Armlehneneinheiten 34a, 36a weisen jeweils ein Komfortelement 144a auf. Das Komfortelement 144a ist jeweils auf einer Oberseite des Grundkörpers 140a der entsprechenden Armlehneneinheit 34a, 36a angeordnet. Das Komfortelement 144a ist fest mit dem jeweiligen Grundkörper 140a verbunden. Das Komfortelement 144a ist dabei aus einem weichen Kunststoff gebildet und bildet eine Auflagefläche für den Passagier aus. Grundsätzlich ist es auch denkbar, dass das Komfortelement 144a zumindest teilweise oder komplett aus einem Silikon gebildet ist. Dabei ist es weiter denkbar, dass das Komfortelement 144a eine Beschichtung aufweist.

Die Rückenlehneneinheit 26a weist eine Verriegelungseinheit 146a auf, die dazu vorgesehen ist, die Lagereinheit 100a, mittels der die Rückenlehneneinheit 26a verstellt werden kann, in unterschiedlichen Stellungen zu arretieren. In einem verriegelten Zustand der Verriegelungseinheit 146a sind der untere Teilbereich 90a und der obere Teilbereich 92a der Rückenlehneneinheit 26a zueinander fixiert. Der untere Teilbereich 90a und der obere Teilbereich 92a der Rückenlehneneinheit 26a können in dem verriegelten Zustand der Verriegelungseinheit 146a nicht zueinander verschwenkt werden. Dazu weist die Verriegelungseinheit 146a nicht näher dargestellte Rastelemente auf. In einem entriegelten Zustand der Verriegelungseinheit 146a sind der untere Teilbereich 90a und der obere Teilbereich 92a der Rückenlehneneinheit 26a zueinander freigegeben und können über die Lagereinheit 100a zueinander verschwenkt werden. Zur Betätigung der Verriegelungseinheit 146a weist die Sitzvorrichtung eine Betätigungseinheit 148a auf. Die Betätigungseinheit 148a ist dabei zumindest teilweise in der Armlehneneinheit 34a angeordnet. Die Betätigungseinheit 148a weist ein Gestänge 150a auf, über das die Verriegelungseinheit 146a betätigbar ist. Das Gestänge 150a ist axial verschiebbar in dem Grundkörper 140a der Armlehneneinheit 34a gelagert. Die Betätigungseinheit 148a weist einen drehbar in der Rückenlehneneinheit 26a gelagerten Betätigungshebel 152a auf, der dazu vorgesehen ist, in einem betätigten Zustand die Verriegelungseinheit 146a zu entriegeln. Die Betätigungseinheit 148a weist ein Federelement 154a auf. Das Federelement 154a ist dazu vorgesehen, eine Kraft auf den Betätigungshebel 152a auszuüben, die diesen in eine Stellung bewegt, in der der Betätigungshebel 152a die Verriegelungseinheit verriegelt. Das Federelement 154a ist dabei als eine Blattfeder ausgebildet. Grundsätzlich ist es auch denkbar, dass das Federelement 154a als eine andere, dem Fachmann als sinnvoll erscheinende Feder ausgebildet ist, wie beispielsweise eine Spiralfeder. Die Betätigungseinheit 148a weist ein Bedienelement 170a auf, über das ein Passagier die Betätigungseinheit 148a bedienen kann. Das Bedienelement 170a ist dabei an einer Unterseite der Armlehneneinheit 34a angebracht. Das Bedienelement 170a ist dabei als ein Hebel ausgebildet, der von einem Passagier verschoben werden kann. Grundsätzlich ist es auch denkbar, dass das Bedienelement 170a beispielsweise als ein Drehknopf, ein Kipphebel oder ein anderes, dem Fachmann als sinnvoll erscheinendes Betätigungselement ausgebildet sein kann. Über das Bedienelement 170a kann ein Passagier das Gestänge 150a axial entlang einer Verschiebeachse 172a verschieben und dadurch den Betätigungshebel 152a gegen die Federkraft des Federelements 154a auslenken und so die Verriegelungseinheit 146a entriegeln. Dann kann der Passagier durch eine Krafteinwirkung auf den oberen Teilbereich 92a der Rückenlehneneinheit 26a diesen zu dem unteren Teilbereich 90a verschwenken. Lässt der Passagier dann das Bedienelement wieder los, drückt das Federelement 154a den Betätigungshebel 152a wieder in seine Verriegelstellung und die Verriegelungseinheit 146a ist wieder verriegelt. Grundsätzlich ist es auch denkbar, dass beispielsweise die gesamte Armlehneneinheit 34a oder zumindest der Grundkörper 140a der Armlehneneinheit 34a das Gestänge ausbildet und als Ganzes von einem Passagier zur Entriegelung der Verriegelungseinheit 146a axial verschoben wird.

Die Sitzvorrichtung weist eine Tischeinheit 156a auf. Die Tischeinheit 156a ist dazu vorgesehen an einer Rückseite der Rückenlehneneinheit 26a angeordnet zu werden. Die Tischeinheit 156a ist dabei an dem unteren Teilbereich 90a der Rückenlehneneinheit 26a angeordnet. Die Tischeinheit 156a ist verschwenkbar an der Rückseite des unteren Teilbereichs 90a der Rückenlehneneinheit 26a angebracht. Die Tischeinheit 156a weist einen Grundkörper 158a auf, der eine Tischfläche 160a der Tischeinheit 156a ausbildet. Zur Anbindung der Tischeinheit 156a weist die Tischeinheit 156a eine Lagereinheit 162a auf. Die Lagereinheit 162a ist an einem unteren Ende des Grundkörpers 158a der Tischeinheit 156a angeordnet. Die Lagereinheit 162a umfasst zwei Lagerhebel 164a, 166a. Dabei ist je ein Lagerhebel 164a, 166a auf einer Seite des Grundkörpers 158a an der Unterseite angeordnet. Die Lagerhebel 164a, 166a erstrecken sich etwa um 100 Grad von der Tischfläche 160a des Grundkörpers 140a weg. Dabei weisen die Lagerhebel 164a, 166a eine leicht gekrümmte Erstreckung auf. Die Lagerhebel 164a, 166a weisen dabei eine Erstreckung von weniger als 15 cm auf. Besonders bevorzugt weisen die Lagerhebel 164a, 166a eine Erstreckung von weniger als 10 cm auf. Die Lagerhebel 164a, 166a weisen eine Erstreckung von 6 cm auf. Die Lagerhebel 164a, 166a sind jeweils mit einem dem Grundkörper 158a abgewandten Ende über ein Schwenklager schwenkbar mit der Rückenlehneneinheit 26a verbunden. Durch die kurzen Lagerhebel 164a, 166a zur Anbindung der Tischeinheit 156a kann besonders vorteilhaft eine Beinfreiheit für einen Passagier bereitgestellt werden, da insbesondere lange, sich nach unten erstreckende Lagerhebel für die Tischeinheit entfallen. Des Weiteren kann durch die kurzen Lagerhebel 164a, 166a eine vorteilhafte Gewichtsersparnis erreicht werden. Der untere Teilbereich 90a der Rückenlehneneinheit 26a bildet je Lagerhebel 164a, 166a ein Anschlagelement 168a aus, an dem der entsprechende Lagerhebel 164a, 166a in einem ausgeklappten Zustand der Tischeinheit 156a anschlägt..

### Bezugszeichen

- 10: Fluggastsitz
- 12: Aufständereinheit
- 14: Sitzbodeneinheit
- 16: Sitzbereich
- 18: Grundkörper
- 20: Polsterelement
- 22: hinterer Bereich
- 24: vorderer Bereich
- 26: Rückenlehneneinheit
- 28: Grundkörper
- 30: Rückenlehnenauflagefläche
- 32: Polsterelement
- 34: Armlehneneinheit
- 36: Armlehneneinheit
- 38: Auflagefläche
- 40: Abstütz- und/oder Abtrennelement
- 42: Abstützfläche
- 44: Oberkante
- 46: Auflageelement
- 48: Auflageelement
- 50: Scharnier
- 52: Schwenkachse
- 54: Abstützelement
- 56: Abstützelement
- 58: Abstützfläche
- 60: Fluggastsitz
- 62: Fluggastsitz
- 64: Sitzreihe
- 66: dünnwandige Rückwand
- 68: dünnwandige Frontwand
- 70: Versteifungselement
- 72: vorderer Bereich
- 74: Teilbereich
- 76: Teilbereich
- 78: Querrichtung
- 80: Sitzrichtung
- 82: Schlitz
- 84: hinterer Bereich
- 86: vorderes Ende
- 88: Schlitz
- 90: starrer unterer Teilbereich
- 92: oberer Teilbereich
- 94: Grundkörper
- 96: dünnwandige Rückwand
- 98: dünnwandige Frontwand
- 100: Lagereinheit
- 102: Schwenkachse
- 104: Erhöhung
- 106: Erhöhung
- 108: Lagerelement
- 110: Anschlagselement
- 112: Anschlagselement
- 114: Polsterelement
- 116: Anlageelement
- 118: Anlageelement
- 120: Sitzlängsreihe
- 122: Sitzbodeneinheit
- 124: Versteifungselement
- 126: Kopfstütze
- 128: Kopfstützelement
- 130: Abstützelement
- 132: Abstützelement
- 134: Linearführung
- 136: Führungsschiene
- 138: Stoppelement
- 140: Grundkörper
- 142: Lagereinheit
- 144: Komfortelement
- 146: Verriegelungseinheit
- 148: Betätigungseinheit
- 150: Gestänge
- 152: Betätigungshebel
- 154: Federelement
- 156: Tischeinheit
- 158: Grundkörper
- 160: Tischfläche
- 162: Lagereinheit
- 164: Lagerhebel
- 166: Lagerhebel
- 168: Anschlagelement
- 170: Bedienelement
- 172: Verschiebeachse

## Patentansprüche

1. Sitzvorrichtung, insbesondere Fluggastsitzvorrichtung, mit wenigstens einer Sitzbodeneinheit (14; 14a) und einer mit der Sitzbodeneinheit (14; 14a) verbundenen Rückenlehneneinheit (26; 26a), die einen starren Teilbereich (90; 90a), der starr mit der Sitzbodeneinheit (14; 14a) gekoppelt ist und einen oberen Teilbereich (92; 92a) aufweist, der schwenkbar zu dem unteren starren Teilbereich (90; 90a) ausgebildet ist, **dadurch gekennzeichnet, dass** die Rückenlehneneinheit (26) eine Lagereinheit (100) umfasst, die einen maximalen Schwenkbereich von etwa 35 Grad aufweist, um den der untere Teilbereich (90) und der obere Teilbereich (92) zueinander verschwenkbar sind, wobei die Rückenlehneneinheit (26; 26a) in einer Komfortposition, die als eine für einen Passagierkomfort optimierte Grundposition ausgebildet ist, in der die Rückenlehneneinheit (26; 26a) eine im Wesentlichen ebene durchgehende Fläche ausbildet, und in der die Rückenlehneneinheit (26; 26a) eine aus einer TTL-Position nach hinten verschwenkte Neigung aufweist, die einem Passagier eine nicht aufrechte Sitzposition ermöglicht, wobei der untere starre Teilbereich (90; 90a) der Rückenlehneneinheit (26; 26a) und der obere schwenkbare Teilbereich (92; 92a) in der Komfortposition im Wesentlichen in einer Ebene zueinander ausgerichtet und nicht zueinander verschwenkt sind, und einer weiteren, als TTL-Position ausgebildeten Sitzposition positionierbar ist, in der die Rückenlehneneinheit (26; 26a) eine andere Neigung zu einem Kabinenboden aufweist als in der Komfortposition, wobei zur Verstellung der Rückenlehneneinheit (26; 26a) lediglich der obere schwenkbare Teilbereich (92; 92a) zu dem unteren starren Teilbereich (90; 90a) verschwenkt ist.

2. Sitzvorrichtung nach Anspruch 1, **gekennzeichnet durch** wenigstens ein seitlich angeordnetes, sich von der Rückenlehneneinheit (26) in einem Bereich der Lagereinheit (100) nach vorne erstreckendes Anlageelement (116, 118).

3. Sitzvorrichtung nach einem der vorhergehenden Ansprüche, **dadurch gekennzeichnet, dass** die Rückenlehneneinheit (26; 26a) und die Sitzbodeneinheit (14; 14a) in der Grundposition einen Sitzwinkel von mindestens 120 Grad aufweisen.

4. Sitzvorrichtung nach einem der vorhergehenden Ansprüche, **dadurch gekennzeichnet, dass** die Rückenlehneneinheit (26; 26a) in der Grundposition eine Neigung von wenigstens 120 Grad zu einer Aufständerebene aufweist.

5. Sitzvorrichtung nach einem der vorhergehenden Ansprüche, **dadurch gekennzeichnet, dass** der Sitzbereich der Sitzbodeneinheit (14) einen Grundkörper (18) aufweist, der zumindest in einem vorderen Bereich (72) zumindest zwei in einer Querrichtung (78) voneinander getrennte Teilbereiche (74, 76) ausbildet, die in einer Höhe zueinander beweglich sind.

6. Sitzvorrichtung nach Anspruch 5, **dadurch gekennzeichnet, dass** der Grundkörper (18) zumindest in seinem vorderen Bereich (72) zumindest einen Schlitz (82) ausbildet, der die zumindest zwei Teilbereiche (72, 74) voneinander abtrennt.

7. Sitzvorrichtung nach einem der vorhergehenden Ansprüche, **dadurch gekennzeichnet, dass** die Armlehneneinheit (34, 36) wenigstens ein im Wesentlichen senkrecht zur Sitzbodeneinheit (14) ausgerichtetes Abstütz- und/oder Abtrennelement (40) und wenigstens ein damit schwenkbar verbundenes Auflageelement (46) aufweist.

8. Sitzvorrichtung nach Anspruch 7, **gekennzeichnet durch** wenigstens ein Abstützelement (54, 56), wobei das Abstützelement (54, 56) zumindest einen Bereich zwischen der Sitzbodeneinheit (14), der Armlehneneinheit (34, 36) und/oder der Rückenlehneneinheit (26) überspannt.

9. Sitzvorrichtung zumindest nach Anspruch 7, **dadurch gekennzeichnet, dass** das Abstützelement (54) in einer Ruhestellung des Auflageelements (46) an eine Abstützfläche (58) des Auflageelements (46) anschließt.

10. Sitzvorrichtung nach einem der vorhergehenden Ansprüche, **dadurch gekennzeichnet, dass** die Rückenlehneneinheit (26) eine Rückenlehnenauflagefläche (30) ausbildet, die in einem unteren Bereich eine Verjüngung aufweist.

11. Layout mit mehreren Fluggastsitzen (10, 60, 62), die eine Sitzvorrichtung nach einem der vorhergehenden Ansprüche aufweisen, **dadurch gekennzeichnet, dass** wenigstens zwei Fluggastsitze (10, 62) hintereinander angeordnet sind, wobei sich eine Rückenlehneneinheit (26) des vorderen Fluggastsitzes (10) in einer Komfortposition bis über eine Sitzbodeneinheit (122) des hinteren Fluggastsitzes (62) erstreckt.

12. Layout nach Anspruch 11, **dadurch gekennzeichnet, dass** eine Überschneidung der Rückenlehneneinheit (26) des vorderen Fluggastsitzes (10) in einer Komfortposition mit der Sitzbodeneinheit (122) des hinteren Fluggastsitzes (62) zumindest 8,89 cm beträgt.

## Claims

1. Seat device, in particular flight passenger seat device,
with at least one seat bottom unit (14; 14a) and with a backrest unit (26; 26a) which is connected to the seat bottom unit (14; 14a), which comprises a rigid sub-region (90; 90a) that is rigidly coupled with the seat bottom unit (14; 14a), and comprises an upper sub-region (92; 92a) that is realized so as to be pivotable with respect to the rigid lower sub-region (90; 90a), **characterized in that** the backrest unit (26; 26a) comprises a bearing unit (100) having a maximal pivot range of approximately 35 degrees by which the lower sub-region (90) and the upper sub-region (92) are pivotable relative to each other,
wherein the backrest unit (26; 26a) can be positioned in a comfort position, which is realized as a basic position optimized for passenger comfort, in which the backrest unit (26; 26a) forms a substantially planar continuous surface and in which the backrest unit has an inclination pivoted from a TTL position to the rear and permitting a passenger a non-upright sitting position, wherein the rigid lower sub-region (90; 90a) of the backrest unit (26; 26a) and the pivotable upper sub-region (92; 92a) are aligned in the comfort position substantially in a plane relative to each other and are not pivoted relative to each other,
and wherein the backrest unit (26; 26a) can be positioned in a further sitting position, which is realized as a TTL position and in which the backrest unit (26; 26a) has a different inclination with respect to a cabin floor than in the comfort position,
wherein for an adjustment of the backrest unit (26; 26a) only the pivotable upper sub-region (92; 92a) is pivoted with respect to the rigid lower sub-region (90; 90a).

2. Seat device according to claim 1,
**characterized by** at least one laterally arranged adjoining element (116, 118), which extends from the backrest unit (26) in a region of the bearing unit (100) frontwards.

3. Seat device according to one of the preceding claims,
**characterised in that** in the basic position the backrest unit (26; 26a) and the seat bottom unit (14; 14a) have a sitting angle of at least 120 degrees.

4. Seat device according to one of the preceding claims,
**characterised in that** in the basic position the backrest unit (26; 26a) has an inclination of at least 120 degrees with respect to a mounting plane.

5. Seat device according to one of the preceding claims,
**characterised in that** the sitting area of the seat bottom unit (14) comprises a base body (18) which forms, at least in a front region (72), at least two partial regions (74, 76) which are separate from each other in a transverse direction (78) and are movable relative to each other in height.

6. Seat device according to claim 5,
**characterized in that** the base body (18) forms, at least in its front region (72), at least one slot (82) that separates the at least two partial regions (74, 76) from each other.

7. Seat device at least according to one of the preceding claims,
**characterized in that** the armrest unit (34, 36) comprises at least one bracing and/or separating element (40), which is oriented perpendicularly to the seat bottom unit (14), and at least one support element (46), which is connected to the bracing and/or separating element (40) in a pivotable manner.

8. Seat device according to claim 7,
**characterised by** at least one bracing element (54, 56), said bracing element (54, 56) spanning at least over a region between the seat bottom unit (14), the armrest unit (34, 36) and/or the backrest unit (26).

9. Seat device at least according to claim 7,
**characterised in that** in a rest position of the support element (46), the bracing element (54) adjoins a bracing surface (58) of the support element (46).

10. Seat device according to one of the preceding claims,
**characterised in that** the backrest unit (26) forms a backrest support surface (30) which has a tapering in its lower region.

11. Layout with several flight passenger seats (10, 60, 62) comprising a seat device according to one of the preceding claims,
**characterised in that** at least two flight passenger seats (10, 62) are arranged one behind the other one, wherein a backrest unit (26) of the frontward flight passenger seat (10) extends in a comfort position up to and across a seat bottom unit (122) of the rearward flight passenger seat (62).

12. Layout according to claim 11,
**characterised in that** an overlap of the backrest unit (26) of the frontward flight passenger seat (10) in a comfort position with the seat bottom unit (122) of the rearward flight passenger seat (62) is at least 8.89 cm.

## Revendications

1. Dispositif de siège, en particulier dispositif de siège de passager d'avion,
avec au moins une unité base de siège (14 ; 14a) et avec une unité dossier (26 ; 26a) liée avec l'unité base de siège (14 ; 14a), comprenant une sub-zone rigide (90 ; 90a) qui est rigidement couplée avec l'unité base de siège (14 ; 14a) et comprenant une sub-zone supérieure (92 ; 92a) qui est réalisée à être pivotable par rapport à la sub-zone rigide inférieure (90 ; 90a),
**caractérisé en ce que** l'unité dossier (26 ; 26a) comprend une unité à palier (100) ayant une plage de pivotement maximale d'approximativement 35 degrés par laquelle la sub-zone inférieure (90) et la sub-zone supérieure (92) sont pivotable l'une par rapport à l'autre,
où l'unité dossier (26 ; 26a) peut être positionnée dans une position de confort, qui est réalisée comme position basique optimisée pour un confort du passager, dans laquelle l'unité dossier (26 ; 26a) forme une surface continue, sensiblement planaire et dans laquelle l'unité dossier (26 ; 26a) a une inclinaison pivotée d'une position TTL [roulage, décollage, atterrissage] en arrière, ce qui permet à un passager une position non-debout, où dans la position de confort la zone rigide inférieure (90 ; 90a) de l'unité dossier (26 ; 26a) et la zone supérieure (92 ; 92a) sont alignées sensiblement en un plan l'une par rapport à l'autre et ne sont pas pivotées l'une par rapport à l'autre,
ou peut être positionnée dans une autre position d'assise réalisée comme position TTL, dans laquelle l'unité dossier (26 ; 26a) présente une inclinaison par rapport à un sol de cabine qui diffère de l'inclinaison dans la position de confort, où pour un ajustement de l'unité dossier (26 ; 26a) seulement la sub-zone pivotable supérieure (92 ; 92a) est pivotée par rapport à la sub-zone rigide inférieure (90 ; 90a).

2. Dispositif de siège selon la revendication 1,
**caractérisé par** au moins un élément jouxtant (116, 118) qui s'étend de l'unité dossier (26) dans une région de l'unité à palier (100) en avant.

3. Dispositif de siège selon l'une des revendications précédentes,
**caractérisé en ce que** dans la position basique l'unité dossier (26 ; 26a) et l'unité base de siège (14 ; 14a) ont un angle d'assise d'au moins 120 degrés.

4. Dispositif de siège selon l'une des revendications précédentes,
**caractérisé en ce que** dans la position basique l'unité dossier (26 ; 26a) a une inclinaison d'au moins 120 degrés par rapport à un plan de structure élevée.

5. Dispositif de siège selon l'une des revendications précédentes,
**caractérisé en ce que** la zone d'assise de l'unité base de siège (14) comprend un corps de base (18) qui forme, au moins dans une zone avant (72), au moins deux zones partielles (74, 76) qui sont séparées l'une de l'autre en direction transversale (78) et sont mouvables l'une par rapport à l'autre en termes de hauteur.

6. Dispositif de siège selon la revendication 5,
**caractérisé en ce que** le corps de base (18) forme au moins dans sa zone avant (72) au moins une fente (82) qui sépare les au moins deux zones partielles (74, 76) l'une de l'autre.

7. Dispositif de siège selon l'une des revendications précédentes,
**caractérisé en ce que** l'unité appuie-bras (34, 36) comprend au moins un élément de support et/ou de partage (40) et au moins un élément porteur (46) raccordé à celui-ci pivotablement.

8. Dispositif de siège selon la revendication 7,
**caractérisé par** au moins un élément de support (54, 56), ledit élément de support (54, 56) enchevauchant au moins une région entre l'unité base de siège (14), l'unité appuie-bras (34, 36) et/ou l'unité dossier (26).

9. Dispositif de siège au moins selon la revendication 7,
**caractérisé en ce que** dans une position de repos de l'élément porteur (46), l'élément de support (54) jouxte une surface de support (58) de l'élément porteur (46).

10. Dispositif de siège selon l'une des revendications précédentes,
**caractérisé en ce que** l'unité dossier (26) forme une surface support-dossier (30) ayant un rétrécissement dans sa région inférieure.

11. Agencement avec plusieurs sièges de passager d'avion (10, 60, 62) comprenant
un dispositif de siège selon l'une des revendications précédentes,
**caractérisé en ce qu'**au moins deux sièges de passager d'avion (10, 62) sont agencés l'un derrière l'autre,
où dans une position de confort une unité dossier (26) du siège de passager d'avion avant (10) s'étende jusqu'à et à travers une unité base de siège (122) du siège de passager d'avion arrière (62).

12. Agencement selon la revendication 11,
**caractérisé en ce que** dans une position de confort un chevauchement de l'unité dossier (26) du siège de passager d'avion avant (10) avec l'unité base de siège (122) du siège de passager d'avion arrière (62) est au moins 8,89 cm.
